# EUROPEAN PATENT APPLICATION

(11) **EP 1 316 897 A1**
(43) Date of publication of application: **04.06.2003**
(21) Application number: 01954443.6
(22) Date of filing: 03.08.2001
(51) Int. Cl.: G06F 17/30, G06F 13/00, G06F 17/60

(54) **SERVER APPARATUS FOR PROCESSING INFORMATION ACCORDING TO INFORMATION ABOUT POSITION OF TERMINAL**

(30) Priority: 07.08.2000 JP 2000238667; 01.09.2000 JP 2000265248; 23.10.2000 JP 2000322766
(71) Applicant: Sharp Kabushiki Kaisha, Osaka-shi, Osaka 545-8522 (JP)
(72) Inventor: MATSUYAMA, Tetsuya, Yamatokoriyama-shi, Nara 639-1008 (JP); MIKATA, Junko, Soraku-gun, Kyoto 619-0216 (JP); NISHIMURA, Hideki, Konforu Kunimidai 201, Soraku-gun, Kyoto 619-0216 (JP)
(74) Representative: Müller, Frithjof E., Dipl.-Ing.
(86) International application number: JP0106717
(87) International publication number: WO02013061

(57) **Abstract**

A method of sending information to a terminal of a user includes the steps of preparing a theme item while keeping a first corresponding relationship with position information and preparing article data to be provided to the user while keeping a second corresponding relationship with the theme item, receiving the position information from the user (S102), reading the theme item having the first corresponding relationship with the received position information and the article data having the second corresponding relationship with the received position information from a fixed disk (S104, S108); and sending the read article data to the user (S112). The method may be configured such that position information is received from the terminal, and is narrowed to establish communication between terminals within shorter distance from each other. The method may be configured such that the position information is received from the terminal, the received current position information is stored while keeping a corresponding relationship with a plurality of position information items prepared in advance, and a predetermined right is assigned to the user of the terminal when the current positions are stored corresponding to all the plurality of positions prepared in advance.

## Description

### Technical Field

The present invention generally relates to a server apparatus connected to a network for performing processing according to information received from a terminal, and particularly to a server apparatus for preparing information to be provided to the terminal according to position information of the terminal sending the information, supporting establishment of communication between the terminals and storing a history of the position information of the terminal.

### Background Art

Such a system is already present that a terminal sends position information to a server apparatus over a network, and the server apparatus performs predetermined processing.

For example, the server apparatus stores, in advance, information corresponding to position information based on a map. The server apparatus receives the position information based on the map from the terminal, and sends information corresponding to the received position information to the terminal. The terminal displays the information on it. The above system is disclosed by Japanese Patent Laying-Open No. 9-34902.

The system disclosed in this publication supplies advertisement information based on the position information. A method of providing advertisements includes the steps of displaying a map based on prestored position information to a requester of advertisement, requesting the requester to designate a position of an advertisement target on the map, storing coordinates of the designated position of the advertisement target while keeping a corresponding relationship with entered advertisement information, displaying a map based on the map information to a user, displaying the advertisement target at a point on the map corresponding to stored coordinates of the advertisement target, requesting selection of the advertisement target, reading the advertisement information related to the selected advertisement target, and providing the read advertisement information to the user.

This system stores the map information, position coordinates of the advertisement target such as a shop provided by the advertisement requester and advertisement information of the shop or the like while keeping a correspondence between them. When a user clicks a mouse or the like on the advertisement target on the map, the advertisement information, which is stored corresponding to the coordinates of the advertisement target, is displayed.

This system merely operates to provide the advertisement information of the shop or the like determined by the position coordinates on the map. This system does not provide information of surrounding or neighboring shops. The advertisement information is provided by the advertisement requester, and therefore is aimed at advertisement of the shop or the like so that this may be different from information, which is truly desired or required by the user.

Further, there is another system, which uses the position information for processing. When communication is to be performed with terminals, this system supports communication with a person at a short distance based on the position information of the terminal. Japanese Patent Laying-Open No. 11-169562 has disclosed this system.

In this system, two kinds of communication devices utilizing radio waves are used for supporting establishment of communication between persons at a short distance. In this system, when a first kind of communication device receives a message sent by radio waves from a second kind of communication device, the first kind of communication device returns a message notifying that its own message matches the received message, if the matching actually occurred. The second kind of communication device makes a notification about the reception of the return.

According to this system, communication can be established, for example, between a woman and a man, who have first and second kinds of communication devices, respectively, and are spaced from each other by a short distance within a wave reaching range.

In this system, such a problem arises that the possibility of establishing communication varies depending on the positions of the devices. Thus, according to the method utilizing the radio waves, the distance between the devices, which can establish communication, depends on the reachable distance of the radio waves, and this distance cannot be changed dynamically. For example, many devices are present within a communication range if these devices are on a busy street or the like. However, only a small number of devices are present within a communication range, e.g., in a quiet suburb. If many devices are present in the communication range, many devices satisfy the conditions, and thus the possibility of establishing communication increases. Conversely, if the number of devices are excessively small, only a small number of devices satisfies the conditions so that the possibility of establishing communication lowers. Accordingly, it is easy to establish communication in busy streets, but it is difficult to establish communication in the suburbs. Thus, the possibility of establishing communication varies depending on the places, where the devices are used. Therefore, it may be envisaged to enlarge uniformly a communication range for easily establishing communication in a quiet place such as a suburb. However, the uniform enlarging of the communication range further increases the number of the devices, which can establish communication on a busy street or the like.

There is further another system for performing processing using position information. In this system, a GPS (Global Positioning System) incorporated into a terminal obtains position information for providing a direction and a distance to a target position. This type of apparatus is disclosed in Japanese Patent Laying-Open No. 9-43334.

The disclosed apparatus is an apparatus for indicating a direction of a destination, and includes a circuit for receiving radio waves from a satellite, a circuit for calculating current position information from information provided by the radio waves, a circuit for storing position information of the destination, a circuit for calculating a direction to the destination from the current position information and destination position information, and displaying an arrow representing the direction, and a circuit for calculating and displaying a distance to the destination.

According to this apparatus, the current position is detected from the radio waves by the GPS, and the apparatus can display the direction and distance to the destination, which is already stored.

This apparatus merely displays the direction and distance to the destination from the current position.

Accordingly, an object of the invention is to provide a server apparatus, which can provide information items related to information of positions on a map and particularly required by a user to a terminal.

Another object of the invention is to provide a server apparatus, which allows a user to prepare information items related to information of positions on a map.

Still another object of the invention is to provide a server apparatus, which can appropriately change a communication range to allow establishment of communication at a shorter distance independently of a position of a terminal.

Yet another object of the invention is to provide a server apparatus, which uses position information of a terminal and position information of a destination, stores a history of the position information of the terminal, and thereby can easily detect a history of movement of the terminal.

Further another object of the invention is to provide a server apparatus, which can provide an award to a user of a terminal based on position information of the terminal stored using the position information of the terminal and position information of a destination.

### Disclosure of the Invention

The invention provides a server apparatus for providing information to a terminal connected over a network. The server apparatus includes a communication circuit connected to the network for performing communication with the terminal; a theme storing circuit for storing one or a plurality of theme item(s) while keeping a first corresponding relationship with a given point or region in a predefined space; an information storing circuit for storing one or a plurality of information item(s) to be provided to the terminal while keeping a second corresponding relationship with the one or the plurality of theme items; and an information operating circuit connected to the communication circuit, the theme storing circuit and the information storing circuit for receiving, via the communication circuit from the terminal, select information for selecting the given point or region in the space as well as processing instruction information instructing processing to be performing on the information item having the second corresponding relationship with the theme item having the first corresponding relationship with the given point or region in the space, and performing the processing determined by the processing instruction information on the information item having the second corresponding relationship with the theme item having the first corresponding relationship with the given point or region in the space.

According to the invention, the theme storing circuit stores the theme item while keeping the first corresponding relationship with the given point or region on the predefined map. The information storing circuit stores the information item to be provided to the terminal while keeping the second corresponding relationship. The information operating circuit receives the select information and the processing instruction information from the terminal, and performs the predetermined processing based on the received processing instruction information on the information item having the second corresponding relationship with the theme item having the first corresponding relationship with the given point or region on the map. Thereby, when the server apparatus receives predetermined information from the terminal, the information item corresponding to the theme item corresponding to the given point or region on the map can be read from the storing circuit, and can be sent to the terminal. The terminal can display the information item sent from the server apparatus.

More preferably, the predefined space is a map space reflecting a real geographical range.

According to this invention, the information item corresponding to the theme item corresponding to the given point or region in the geographical space can be read and sent from the storing circuit to the terminal, and the terminal can display the information item corresponding to the geographical space sent from the server apparatus.

More preferably, the information operating circuit includes an information retrieving circuit connected to the communication circuit, the theme storing circuit and the information storing circuit for receiving the select information for selecting the given point or region in the space and first processing instruction information from the terminal via the communication circuit, retrieving the information item having the second corresponding relationship with the theme item having the first corresponding relationship with the given point or region in the space from the information storing circuit, and sending the retrieved information item to the terminal previously sending the first processing instruction information via the communication circuit.

According to this invention, the information retrieving circuit receives the select information and the first processing instruction information from the terminal via the communication circuit, and retrieves the information item having the second corresponding relationship with the theme item having the first corresponding relationship with the given point or region in the space based on the received select information. The retrieved information item is sent to the terminal, which sent the first processing instruction information. Thereby, when the server apparatus receives the predetermined information from the terminal, the information item corresponding to the theme item corresponding to the given point or region on the map is sent to the terminal. The terminal can display the information item sent from the server apparatus.

More preferably, the information operating circuit includes an information retrieving circuit connected to the communication circuit, the theme storing circuit and the information storing circuit for receiving theme designating information designating a given theme item and first processing instruction information from the terminal via the communication circuit, retrieving the information item having the second corresponding relationship with the theme item designated by the theme designating information from the information storing circuit, and sending the retrieved information item to the terminal previously sending the first processing instruction information via the communication circuit.

According to this invention, the information retrieving circuit receives the theme designating information designating the given theme item and the first processing instruction information from the terminal, and retrieves the information item having the second corresponding relationship with the theme item designated by the received theme designating information. The retrieved information item is sent to the terminal, which sent the first processing instruction information. Thereby, when the server apparatus receives the predetermined information from the terminal, the information item corresponding to the theme item designated by the theme designating information is sent to the terminal. The terminal can display the information item sent from the server apparatus.

More preferably, the information operating circuit includes a theme adding circuit connected to the communication circuit and the theme storing circuit for receiving select information for selecting the given point or region in the space, a theme item name designated by the terminal and second processing instruction information from the terminal via the communication circuit, and adding the new theme item having the theme item name to the theme storing circuit for storage while keeping the first corresponding relationship with the given point or region selected by the select information in the space.

According to the invention, the theme adding circuit receives the select information for selecting the given point or region in the space from the terminal, the theme item name designated by the terminal and the second processing instruction information. The new theme item having the received theme item name is added to and stored in the theme storing circuit while keeping the first corresponding relationship with the given point or region in the space selected by the select information. Thereby, the terminal can add the new theme item related to the given point or region in the space, and the theme item really required by another terminal (i.e., the theme item including the information prepared by a user who is a customer of the shop or the like, rather than mere advertisements of the shop or the like) can be provided to the terminal.

More preferably, the information operating circuit further includes a theme retrieving circuit connected to the communication circuit, the theme storing circuit and the information storing circuit for receiving region information for selecting a given region in the space and third processing instruction information from the terminal via the communication circuit, retrieving the theme item included in the region selected by the region information, and sending the retrieved theme item via the communication circuit to the terminal previously sending the third processing instruction information.

According to the invention, the theme retrieving circuit receives the region information for selecting the given region in the space and the third processing instruction information, and retrieves the theme item included in the region selected in accordance with the received region information. The retrieved theme item is sent to the terminal, which sent the third processing instruction information. Thereby, the theme item included in the given region in the space is sent to the terminal, and the theme item related to the given region in the space can be provided to the terminal.

More preferably, the server apparatus further includes a delivery condition storing circuit for storing destination information for the one terminal or each of the plurality of terminals, and information delivery conditions determined for the one terminal or each of the plurality of terminals, and information delivery circuit for performing retrieval on the delivery condition storing circuit in response to occurrence of change caused by the information operating circuit in stored contents of the theme storing circuit or the information storing circuit, thereby extracting the terminal having the information delivery conditions satisfied by the change, and sending a notification about the change in accordance with the destination information corresponding to the extracted terminal.

According to the invention, the delivery condition storing circuit stores in advance the destination information for each of the terminals and the information delivery conditions determined for the terminal. The information delivery circuit performs the retrieval on the delivery condition storing circuit in response to the change occurred in the theme storing circuit or the information storing circuit, and thereby extracts the terminal having the information delivery conditions satisfied by the change. The information is sent to the extracted terminal. For example, in such a case that the terminal has already determined the given region in the space and this region contains a point related to a new added theme or article, the system can send the newly added theme or article to the terminal.

More preferably, the information delivery conditions are that the delivery is performed if the given region is in the space, and the point related to the newly added theme or article is present in this region.

According to the invention, the terminal determines in advance the given region in the space, and the newly added theme or article is sent to the terminal if the point related to the newly added theme or article is present in this region so that the theme or article can be immediately read or viewed on the terminal.

More preferably, the information delivery conditions are automatically set in accordance with the processing instruction information of the terminal.

According to the invention, when the terminal requests the given point or region in the space, the requested point or region is automatically determined as the information delivery conditions. When the point related to the newly added theme or article is present in this region, the newly added theme or article is sent to the terminal, and can be viewed on the terminal.

More preferably, the delivery condition storing circuit further includes an edit circuit for editing the information delivery conditions in accordance with an instruction by the terminal.

According to this invention, the terminal itself can edit the delivery conditions. For example, it can change the destination, and/or can restrict the number of notifications per day.

According to another aspect, the invention provides an information providing method for providing information to a terminal connected over a network. The information providing method includes the steps of preparing one or a plurality of theme items while keeping a first corresponding relationship with a given point or region in a predefined space; preparing one or a plurality of information item(s) to be provided to the terminal while keeping a second corresponding relationship with the one or the plurality of theme items; and receiving, from the terminal, select information for selecting the given point or region in the space as well as processing instruction information instructing processing to be performing on the information item having the second corresponding relationship with the theme item having the first corresponding relationship with the given point or region in the space, and performing the processing determined by the processing instruction information on the information item having the second corresponding relationship with the theme item having the first corresponding relationship with the given point or region in the space.

According to the invention, the theme item is prepared while keeping the first corresponding relationship with the given point or region on the predefined map. The information item to be provided to the terminal is prepared while keeping the second corresponding relationship. When the select information and the processing instruction information are received from the terminal, the predetermined processing is performed based on the received processing instruction information on the information item having the second corresponding relationship with the theme item having the first corresponding relationship with the given point or region in the space. Thereby, when the predetermined information is received from the terminal, the information item corresponding to the theme item corresponding to the given point or region in the space can be read from a storing circuit, and can be sent to the terminal. The terminal can display the information item sent thereto.

According to still another aspect, the invention provides a computer-readable record medium storing a program achieving an information providing method for providing information to a terminal connected over a network. The information providing method includes the steps of preparing one or a plurality of theme items while keeping a first corresponding relationship with a given point or region in a predefined space; preparing one or a plurality of information item(s) to be provided to the terminal while keeping a second corresponding relationship with the one or the plurality of theme items; and receiving, from the terminal, select information for selecting the given point or region in the space as well as processing instruction information instructing processing to be performing on the information item having the second corresponding relationship with the theme item having the first corresponding relationship with the given point or region in the space, and performing the processing determined by the processing instruction information on the information item having the second corresponding relationship with the theme item having the first corresponding relationship with the given point or region in the space.

According to the invention, the theme item is prepared while keeping the first corresponding relationship with the given point or region on the predefined map. The information item to be provided to the terminal is prepared while keeping the second corresponding relationship. When the select information and the processing instruction information are received from the terminal, the predetermined processing is performed based on the received processing instruction information on the information item having the second corresponding relationship with the theme item having the first corresponding relationship with the given point or region in the space. Thereby, when the predetermined information is received from the terminal, the information item corresponding to the theme item corresponding to the given point or region in the space can be read from a storing circuit, and can be sent to the terminal. The terminal can display the information item sent thereto. The invention can provides the record medium storing the program for achieving the above information providing method.

According to yet another aspect, the invention provides a server apparatus for supporting establishment of communication between terminals connected over a network. The server apparatus includes an obtaining circuit for obtaining identifying information of the terminal and position information of the terminal via the network; a storing circuit for storing the obtained identifying information and the obtained position information while keeping a corresponding relationship between them; a calculating circuit for calculating the number of the terminal(s) located within a predetermined distance from one terminal other then the above terminal(s) based on the stored position information; a deciding circuit for deciding a distance allowing communication from the one terminal based on the calculated number of the terminal(s); an extracting circuit for extracting the other terminal(s) located within the decided distance with reference to the stored identifying information and the stored position information; and a select circuit for selecting the extracted other terminal(s) as terminal(s) having a possibility of establishing communication with the one terminal.

According to the invention, the number of the terminals located within the predetermined distance from the one terminal is calculated based on the position information of the terminal, and the distance allowing communication from the one terminal is determined based on the calculated number of the terminals. The number of the terminals, which are calculated in the case where the one terminal is located in a busy place such as a busy street, is different from that in the case where the one terminal is present in a quiet place such as a suburb. Therefore, consideration is appropriately given to the position of the terminal, and the communication-allowing distance (communication range) of a smaller value is determined. Further, the other terminals present in the determined communication range are selected as the terminals having a possibility of establishing communication with the one terminal. Accordingly, the one terminal has a higher possibility of establishing communication with another terminal located at a shorter distance. By appropriately changing the communication range, therefore, it is possible to provide the server apparatus, which always allows establishment of communication at a shorter distance regardless of the position of the terminal.

More preferably, the deciding circuit includes a determining circuit for determining whether the calculated number of the terminals satisfies predetermined conditions or not, a changing circuit for changing the predetermined distance, and a control circuit for performing control such that the changing of the predetermined distance by the changing circuit and the calculation of the number of the other terminals located within the predetermined distance changed by the changing circuit are repeated until the determining circuit determines the satisfaction of the predetermined conditions. The predetermined distance changed by the changing circuit is decided as the distance allowing the communication when the determining circuit determines the satisfaction.

According to the invention, the predetermined distance is changed until the calculated number of the terminals satisfies the predetermined conditions, and the calculation of the number of the terminals located within the predetermined distance thus changed is repeated. The predetermined distance, which is obtained when the predetermined conditions are satisfied, is determined as the communication-allowing distance (communication range). By changing the predetermined distance, the optimum distance satisfying the predetermined conditions is determined as the communication-allowing distance. Therefore, it is possible to obtain the more appropriate communication range in accordance with the position of the terminal.

More preferably, the predetermined conditions in the determining circuit are that the number is equal to or larger than a predetermined number, and the changing circuit increases the predetermined distance.

According to the invention, it is determined whether the calculated number of the terminals is equal to or larger than the predetermined number or not. If not, the predetermined distance is increased, and then the number of the other terminals is calculated again. The predetermined distance, which is obtained when the number of the other terminals is equal to or larger than the predetermined number, is determined as the communication-allowing distance. Since the communication-allowing distance is gradually increased until the number of the terminals reaches the predetermined number, a shorter distance depending on the position of the terminal is determined as the communication-allowing distance. Therefore, a constant number of terminals are present in the communication-allowing range independently of the position of the terminal, and the possibility of establishing communication is ensured.

More preferably, the obtained position information of the terminal relates to a cell containing the terminal, and the calculating circuit includes a circuit for extracting the cell located within the predetermined distance from the one terminal, and a circuit for obtaining the number of the terminals located within the extracted cell.

According to the invention, the information of the cell containing the terminal serves as the information indicating the position of the terminal, and the number of the other terminals located within the predetermined distance is calculated by obtaining the number of the terminals in the cell at the predetermined distance. Therefore, the position information of the terminal and the number of the terminals can be easily obtained by using the already-existing cell system.

Further preferably, the position information of the terminal to be obtained is obtained by a GPS receiver arranged in the terminal.

According to this invention, the position information of the terminal itself is obtained from the GPS receiver arranged in the same terminal. Therefore, the position information of the terminal can be easily and specifically obtained.

According to further another aspect, the invention provides an information communication method in a server apparatus for supporting establishment of communication between a plurality of terminals connected over a network. The information communication method includes the steps of obtaining identifying information of the terminal and position information of the terminal over the network; storing the obtained identifying information and the obtained position information while keeping a corresponding relationship between them; calculating the number of the terminal(s) located within a predetermined distance from one terminal other then the above terminal(s) based on the stored position information; deciding a distance allowing communication from the one terminal based on the calculated number of the terminal(s); extracting the other terminal(s) located within the decided distance with reference to the stored identifying information and the stored position information; and selecting the extracted other terminal(s) as terminal(s) having a possibility of establishing communication with the one terminal.

According to the invention, the number of the terminals located within the predetermined distance from the one terminal is calculated based on the position information of the terminal, and the distance allowing communication from the one terminal is determined based on the calculated number of the terminals. The number of the terminals, which are calculated in the case where the one terminal is located in a busy place such as a busy street, is different from that in the case where the one terminal is present in a quiet place such as a suburb. Therefore, consideration is appropriately given to the position of the terminal, and the communication-allowing distance (communication range) of a smaller value is determined. Further, the other terminals present in the determined communication range are selected as the terminals having a possibility of establishing communication with the one terminal. Accordingly, the one terminal has a higher possibility of establishing communication with another terminal located at a shorter distance.

According to a further aspect, the invention provides a computer-readable record medium storing a program achieving an information communication method in a server apparatus for supporting establishment of communication between a plurality of terminals connected over a network. The information communication method includes the steps of obtaining identifying information of the terminal and position information of the terminal over the network; storing the obtained identifying information and the obtained position information while keeping a corresponding relationship between them; calculating the number of the terminal(s) located within a predetermined distance from one terminal other then the above terminal(s) based on the stored position information; deciding a distance allowing communication from the one terminal based on the calculated number of the terminal(s); extracting the other terminal(s) located within the decided distance with reference to the stored identifying information and the stored position information; and selecting the extracted other terminals) as terminal(s) having a possibility of establishing communication with the one terminal.

According to the invention, the number of the terminals located within the predetermined distance from the one terminal is calculated based on the position information of the terminal, and the distance allowing communication from the one terminal is determined based on the calculated number of the terminals. The number of the terminals, which are calculated in the case where the one terminal is located in a busy place such as a busy street, is different from that in the case where the one terminal is present in a quiet place such as a suburb. Therefore, consideration is appropriately given to the position of the terminal, and the communication-allowing distance (communication range) of a smaller value is determined. Further, the other terminals present in the determined communication range are selected as the terminals having a possibility of establishing communication with the one terminal. Accordingly, the invention can provide the record medium storing the program for achieving the information communication method, in which the one terminal has a higher possibility of establishing communication with another terminal located at a shorter distance.

According to a further aspect, the invention provides a server apparatus connected to a network, and including a receiving circuit for receiving current position information representing a position of a mobile terminal from the mobile terminal over the network; a first storing circuit for storing a plurality of items of position information; and a second storing circuit connected between the receiving circuit and the storing circuit for storing the received current position information while keeping a corresponding relationship with the plurality of items of the position information when the received current position information is contained in the plurality of items of the position information stored in the storing circuit.

According to the invention, the mobile terminal obtains the current position information, e.g., from a GPS receiver, and sends it to the server apparatus. When the current position information is included in the plurality of prestored position information items, the server apparatus stores the current position information while keeping the corresponding relationship with the plurality of position information items. Thereby, it is easy to execute, e.g., a stamp rally, which is an event for the purpose of attracting potential customers (and is executed in such a manner that a plurality of locations are predetermined, a stamp is prepared in each location, and a user can get a free gift by visiting the respective locations and collecting all the stamps).

More preferably, the server apparatus further includes processing circuit for performing predetermined processing when the second storing circuit stores the current position information corresponding to all of the plurality of position information items.

According to the invention, when the current position information corresponding to all of the plurality of prestored position information items is stored (e.g., when a user visited all the locations), the processing circuit performs the processing, e.g., for delivering a free gift to the user.

More preferably, the predetermined processing is performed for assigning a right of receiving a free gift to a user of the mobile terminal.

According to the invention, the free gift can be given to the user, who stored the current position information corresponding to all of the plurality of prestored position information items.

More preferably, the server apparatus further includes a third storing circuit for storing moving route information representing a sequence of movement to a plurality of positions represented by the plurality of items of the position information. The processing circuit includes a circuit for performing predetermined processing when the second storing circuit stores the current position information corresponding to all of the plurality of position information items in accordance with the sequence stored in the third storing circuit.

According to the invention, the processing circuit performs the processing, e.g., for delivering a free gift to a user when all the current position information items are stored in connection with the plurality of prestored position information items in accordance with the predetermined sequence (i.e., when the user joining in the stamp rally visited all the positions in accordance with the predetermined sequence).

More preferably, the predetermined processing is performed for assigning a right of receiving the free gift to a user of the mobile terminal, and sending information relating to the right to the mobile terminal.

According to the invention, it is possible to send the information for giving the free gift to the user, who stored the current position information corresponding to all of the plurality of prestored position information items in accordance with the predetermined sequence.

More preferably, the server apparatus includes a sending circuit connected to the second storing circuit for sending the current position information stored in the second storing circuit and corresponding to the plurality of position information items to another computer.

According to this invention, it is possible to recognize, by another computer, the current position information of the mobile terminal and the current status of the stamp rally.

More preferably, the server apparatus further includes a position information receiving circuit connected to the first storing circuit for receiving the plurality of position information items from another computer, and storing the plurality of received position information items in the first storing circuit.

According to the invention, the information and sequence of the stamp rally, which are prepared by another computer, can be sent to the server apparatus.

More preferably, the current position information is obtained from a GPS receiver arranged in the mobile terminal.

According to this invention, the position information of the mobile terminal itself is obtained from the GPS receiver arranged in the same terminal. Therefore, the position information of the terminal can be easily and specifically obtained.

According to a further aspect, the invention provides an information processing method in a server apparatus connected to a network, and including the steps of receiving current position information representing a position of a mobile terminal from the mobile terminal over the network; preparing in advance a plurality of items of position information; and storing the received current position information while keeping a corresponding relationship with the plurality of items of the position information when the received current position information is contained in the plurality of items of the position information.

According to the invention, the mobile terminal obtains the current position information, e.g., from a GPS receiver, and sends it to the server apparatus. In the information processing method, when the current position information is included in the plurality of prestored position information items, the current position information is stored while keeping the corresponding relationship with the plurality of position information items. Thereby, it is easy to execute, e.g., the stamp rally, which is an event for the purpose of attracting potential customers.

According to a further aspect, the invention provides a computer-readable record medium storing a program achieving an information processing method in a server apparatus connected to a network. The information processing method includes the steps of receiving current position information representing a position of a mobile terminal from the mobile terminal over the network; preparing in advance a plurality of items of the position information; and storing the received current position information while keeping a corresponding relationship with the plurality of items of the position information when the received current position information is contained in the plurality of items of the position information.

According to the invention, the mobile terminal obtains the current position information, e.g., from a GPS receiver, and sends it to the server apparatus. In the information processing method, when the current position information is included in the plurality of prestored position information items, the current position information is stored while keeping the corresponding relationship with the plurality of position information items. Thereby, it is easy to execute, e.g., a stamp rally, which is an event for the purpose of attracting potential customers. Accordingly, the invention can provide the record medium storing the program for easily achieving the stamp rally.

### Brief Description of the Drawings

Fig. 1 shows an outer appearance of a computer system achieving a server apparatus according to a first embodiment of the invention;
Fig. 2 is a block diagram illustrating control of the computer system shown in Fig. 1;
Fig. 3 illustrates user information stored on a fixed disk in the first embodiment of the invention;
Fig. 4 illustrates display area information stored on the fixed disk in the first embodiment of the invention;
Fig. 5 illustrates theme information (example 1) stored on the fixed disk in the first embodiment of the invention;
Fig. 6 is a flowchart illustrating procedures of control of map display processing according to the first embodiment of the invention;
Fig. 7 is a flowchart illustrating procedures of control of information display processing according to the first embodiment of the invention;
Fig. 8 shows an example (example 1) of display on a screen of a monitor of a user's terminal according to the first embodiment of the invention;
Fig. 9 shows an example (example 2) of display on the screen of the monitor of the user's terminal according to the first embodiment of the invention;
Fig. 10 shows an example (example 3) of display on the screen of the monitor of the user's terminal according to the first embodiment of the invention;
Fig. 11 shows an example (example 4) of display on the screen of the monitor of the user's terminal according to the first embodiment of the invention;
Fig. 12 shows an example (example 5) of display on the screen of the monitor of the user's terminal according to the first embodiment of the invention;
Fig. 13 shows an example (example 6) of display on the screen of the monitor of the user's terminal according to the first embodiment of the invention;
Fig. 14 illustrates theme information (example 2) stored on the fixed disk in the second embodiment of the invention;
Fig. 15 illustrates user information stored on the fixed disk in the second embodiment of the invention;
Fig. 16 is a flowchart illustrating procedures of control of delivery condition registering processing according to the second embodiment of the invention;
Fig. 17 is a flowchart illustrating procedures of control of delivery processing according to the second embodiment of the invention;
Fig. 18 shows an example (example 1) of display on a screen of a monitor of the user's terminal according to the second embodiment of the invention;
Fig. 19 shows an example (example 2) of display on the screen of the monitor of the user's terminal according to the second embodiment of the invention;
Fig. 20 shows an example (example 3) of display on the screen of the monitor of the user's terminal according to the second embodiment of the invention;
Fig. 21 shows an example (example 4) of display on the screen of the monitor of the user's terminal according to the second embodiment of the invention;
Fig. 22 shows an example (example 5) of display on the screen of the monitor of the user's terminal according to the second embodiment of the invention;
Fig. 23 illustrates theme information stored on a fixed disk according to the second embodiment of the invention;
Fig. 24 shows a whole structure of a communication system according to a third embodiment of the invention;
Fig. 25 is a diagram of cells for illustrating a relationship between a base station, cells and terminals;
Fig. 26 is a flowchart illustrating procedures of control of whole processing in a server apparatus according to the third embodiment;
Fig. 27 is a flowchart illustrating procedures of control of terminal-narrowing processing (S309 in Fig. 26) for satisfying distance conditions;
Fig. 28 illustrates the distance conditions of a target terminal and a relationship between the target terminal and a given terminal having a possibility of establishing communication with the same according to the processing illustrated in Fig. 27;
Fig. 29 is a block diagram showing a schematic structure of the terminal;
Figs. 30A - 30D show virtual living things displayed on a display of the terminal;
Fig. 31 shows a whole structure of the communication system according to a fourth embodiment of the invention;
Fig. 32 is a flowchart illustrating procedures of control of whole processing in a server apparatus according to the fourth embodiment;
Fig. 33 is a flowchart illustrating procedures of control of terminal-narrowing processing (S509 in Fig. 32) for satisfying distance conditions;
Fig. 34 illustrates a whole structure of a stamp rally system according to a fifth embodiment of the invention;
Fig. 35 is a block diagram of a stamp rally server apparatus in the stamp rally system in Fig. 34;
Fig. 36 is a flowchart illustrating procedures of control of stamp rally processing according to the fifth embodiment of the invention;
Fig. 37 is a flowchart (example 1) illustrating procedures of control of content registering processing added to the flowchart in Fig. 36;
Fig. 38 is a flowchart illustrating procedures of control of annexed information registering processing added to the flowchart in Fig. 36;
Fig. 39 is a flowchart (example 2) illustrating procedures of control of content registering processing added to the flowchart in Fig. 36;
Fig. 40 is a flowchart illustrating procedures of control of scenario registering processing;
Fig. 41 is a block diagram showing a cellular phone and facilities for communication; and
Fig. 42 is a flowchart illustrating procedures of control of processing for obtaining position information using the communication facilities shown in Fig. 41.

### Best Modes for Carrying Out the Invention

Embodiments of the invention will now be described with reference to the drawings. In the following description, the same parts bear the same reference numbers and the same names, and achieve the same functions.

### <First Embodiment>

A server apparatus for providing information according to a first embodiment is achieved by software, which is executed on a computer such as a personal computer or a workstation.

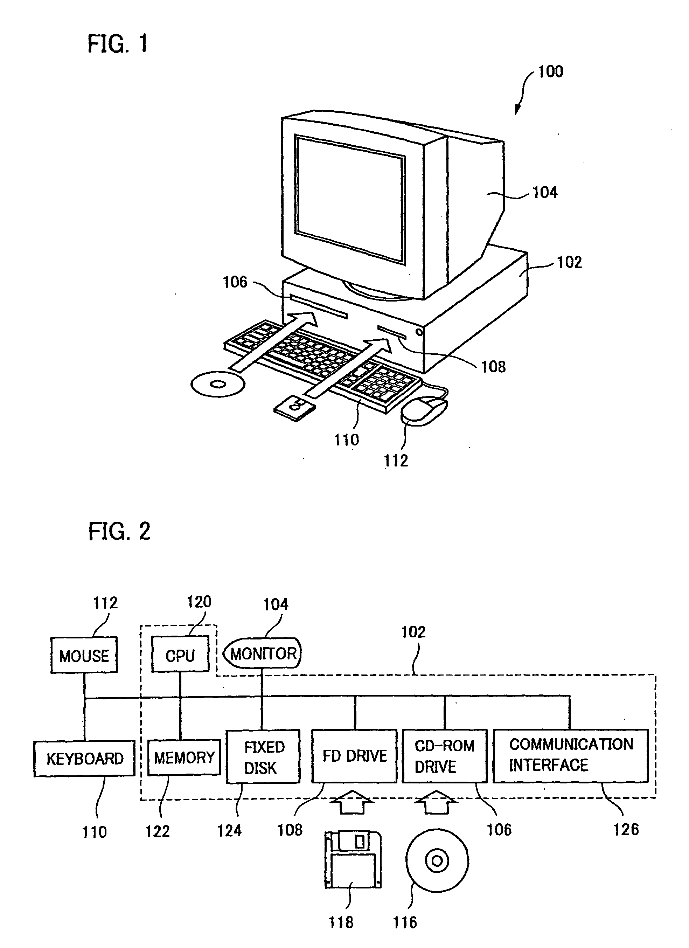

Fig. 1 shows an outer appearance of a computer system, which is an example of the server apparatus for providing information. Referring to Fig. 1, computer system 100 includes a computer 102 provided with a FD (Flexible Disk) drive 108 and a CD-ROM (Compact Disk-Read Only Memory) drive 106, a monitor 104, a keyboard 110 and a mouse 112.

Fig. 2 shows a structure of computer system 100 in a block diagram form. As shown in Fig. 2, computer 102 includes, in addition to FD drive 108 and CD-ROM drive 106, a CPU (Central Processing Unit) 120, a memory 122, a fixed disk 124 and a communication interface 126, which are connected together via a bus. A flexible disk 118 is set in FD drive 108. A CD-ROM 116 is set in CD-ROM drive 106.

The server apparatus for providing information is achieved by the computer hardware described above and software executed by CPU 120. In general, such software is stored on a record medium such as flexible disk 118 or CD-ROM 116 when it is distributed. FD drive 108, CD-ROM drive 106 or the like reads the software from the record medium, and stores it on fixed disk 124. The software is read from fixed disk 124 into memory 122, and is executed by CPU 120. The hardware itself shown in Figs. 1 and 2 has general structures. Therefore, the most essential part of the invention is the software stored on the record medium such as flexible disk 118, CD-ROM 116 or fixed disk 124.

Fixed disk 124 shown in Fig. 2 stores map data in an electronic form. The map data in the electronic form can represent an real geographic map in the form of two-dimensional information based on the longitude and latitude information, which can express any position on the earth.

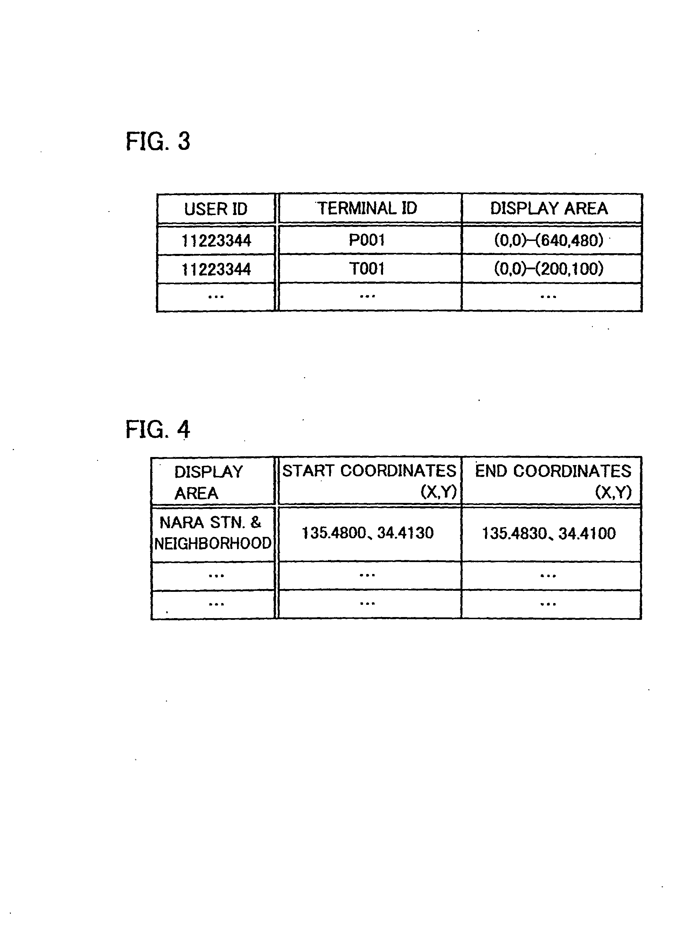

Referring to Fig. 3, user data information stored on fixed disk 124 includes a terminal ID for identifying a terminal of a user, and data representing a display area, which can be used for displaying map information by the terminal. For example, coordinates of the upper left end and lower bottom right end on the display monitor of the terminal are used as data for representing the display area. As shown in Fig. 3, the user identified by a user ID of "11223344" has a terminal identified by the terminal ID of "P001", and the display area of this terminal is represent by "(0, 0) - (640, 480)", which means that the user has a personal computer capable of display by 640 x 480 dots. A terminal identified by the terminal ID of "T001" has a display area represented by "(0, 0) - (200, 100)", which means that the terminal is a cellular phone, a PDA (Personal Digital Assistant) or the like capable of display by 200 x 100 dots.

As shown in Fig. 3, a plurality of terminal IDs can be registered for one user ID. Therefore, one user can request information by connecting a personal computer in his/her home to this server apparatus, and further by connecting a cellular phone or the like outside the home to the server apparatus.

Referring to Fig. 4, the display area information stored on fixed disk 124 includes start coordinates (X, Y) and end coordinates (X, Y) for each display area. As illustrated in Fig. 4, if the display area is, e.g., "Nara station and neighborhood", the start coordinates of (135.4800, 34.4130) and the end coordinates of (135.4830, 34.4100) are stored. These coordinates correspond to the longitude information and latitude information in the foregoing electronic map data. When a user requests display of "Nara station and neighborhood, the start and end coordinates are read from the display area information illustrated in Fig. 4. The map data in the electronic form corresponding to the read coordinates is read from fixed disk 124. Coordinate transformation is effected on the read map data for allowing display on the display area of the terminal identified by the terminal ID. The map data subjected to the coordinate transformation is sent to the user's terminal. The user's terminal displays a map of "Nara station and neighborhood".

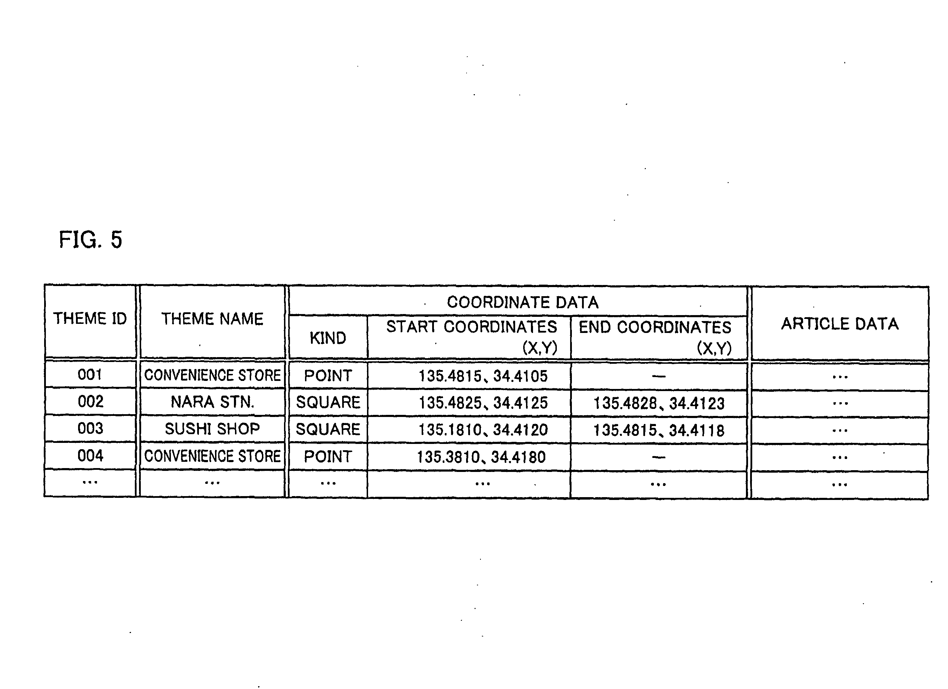

Referring to Fig. 5, the theme information stored on fixed disk 124 includes a theme name, coordinate data and article data for each theme ID. A first corresponding relationship is established between the theme ID and the coordinate data, and a second corresponding relationship is established between the theme ID and the article data. The theme ID can identify the theme information stored on fixed disk 124. The theme name is a text data for displaying a name of the theme on the map. The coordinate data includes a kind of theme icon for identifying the theme, and the start and end coordinates of the theme icon. The kinds of the theme icon are classified by its form, e.g., into point information, square information and others. When the point information represents the theme icon, only the start coordinates are stored. When the square information represents the theme icon, the start and end coordinates are stored. The theme icon is not restricted to the above, and may have a circular form, an elliptic form or the like. Fixed disk 124 stores the data representing the form of the theme icon corresponding to the theme ID.

CPU 120 shown in Fig. 2 can retrieve the coordinate data based on the theme ID, can retrieve the theme ID based on the coordinate data and can retrieve the article data based on the theme ID. When the theme icon is represented by the square information, CPU 120 can determine whether the coordinate data entered via the user's terminal falls within the range of the square or not. When the theme icon is represented by the point information, CPU 120 can determine whether the coordinate data entered via the user's terminal is located within the predetermined distance from the point coordinates or not. The coordinates of the theme information correspond to the longitude and latitude information in the map data in the electronic form stored on fixed disk 124, as already described with reference to Fig. 4.

The article data is data received from users, and fixed disk 124 store the article data related to each of the theme IDs.

Operations of the computer itself other than those already described with respect to Figs. 1 and 2 are well known, and therefore description thereof is not repeated.

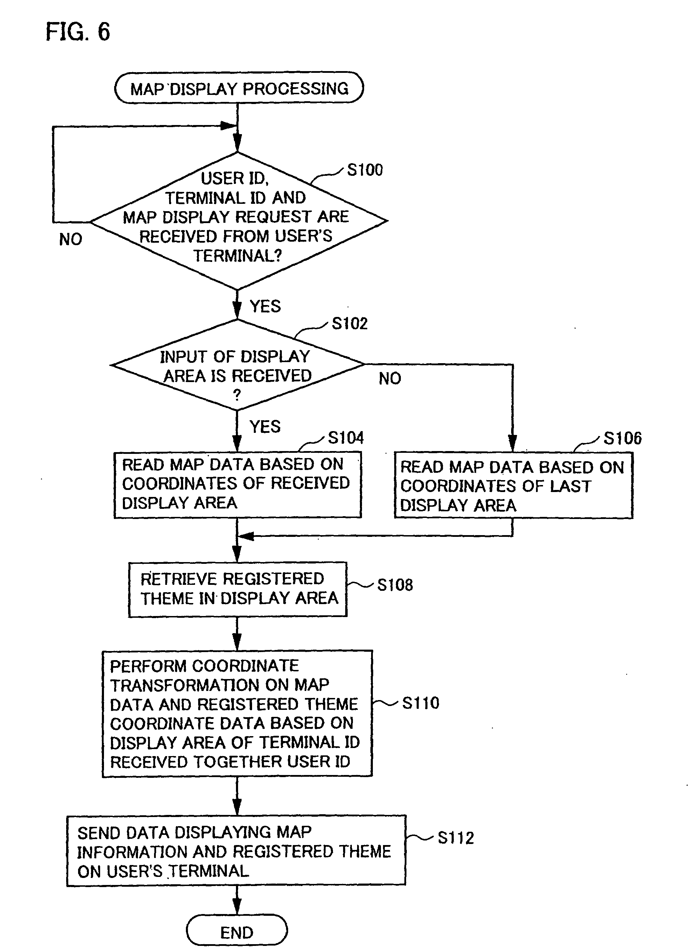

Referring to Fig. 6, the program executed by the server apparatus relates to map display processing, and has the following control structure.

In a step S100 (the step may be simply referred to as "S" hereinafter), CPU 120 determines whether the user ID, terminal ID and map display request are received from the user's terminal via communication interface 126 or not. When the user ID, terminal ID and map display request are received from the user's terminal (YES in step S 100), the processing moves to a step S102. If not (NO in step S 100), the processing returns to step S100 for waiting for reception of the information from the user's terminal.

In step S102, CPU 120 determines whether the input of display area is received from the user's terminal or not. This determination is performed when the user selects one of predetermined display areas illustrated in Fig. 4, and the selected display area is received from the user's terminal. When the input of display area is received (YES in step S102), the processing moves to a step S104. If not (NO in step S102), the processing moves to a step S106.

In step S104, CPU 120 reads the map data from fixed disk 124 based on the coordinate data of the received display area. In this processing, the start and end coordinates of the received display area are read based on the coordinate data (Fig. 4) of the display area information, and the map data corresponding to the read coordinate data is read from fixed disk 124.

In step S106, CPU 120 reads the map data from fixed disk 124 based on the coordinate data of the last display area if the input of display area is not received.

In a step S108, CPU 120 retrieves a theme, which is already registered and is present within the display area of the map data thus read. In this processing, the registered theme within the display area is retrieved based on the coordinate data (Fig. 4) of the display area information and the coordinate data (Fig. 5) of the theme information.

In a step S 110, CPU 120 performs the coordinate transformation on the map data and the coordinate data of the registered theme based on the display area of the terminal ID received together with the user ID. This coordinate transformation of the map data is performed based on the display area (Fig. 3) of the user information and the coordinate data (Fig. 4) of the display area information. The coordinate transformation of the coordinate data of the registered theme is performed based on the display area (Fig. 3) of the user information and the coordinate data (Fig. 5) of the theme information.

In a step S112, CPU 120 sends the coordinate data, which is subjected to the coordinate transformation, and the data for displaying map information and registered theme name on user's terminal via communication interface 126. In this processing, data is also sent for displaying the theme icon bearing the theme name assigned by the user's terminal at a predetermined position.

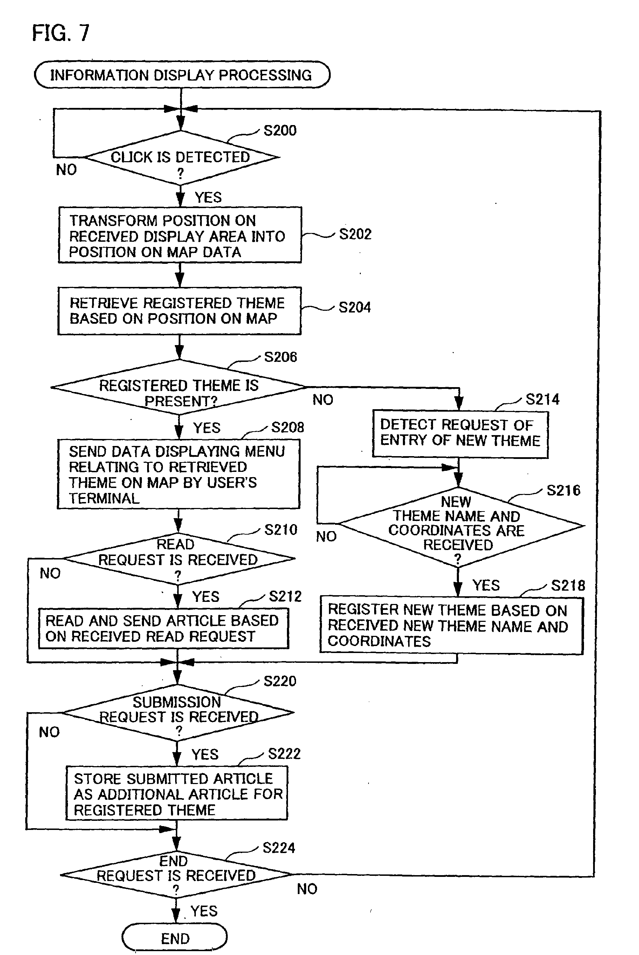

Referring to Fig. 7, the program executed by the server apparatus has the following control structure in connection with the information display processing.

In a step S200, CPU 120 determines whether the user clicked a given position on the map displayed on the user's terminal or not. For this determination, the server apparatus receives the coordinate data of the clicked position from the terminal when the user clicked the given position on the map displayed on the user's terminal. When the clicking at the given point on the map is detected (YES in step S200), the processing moves to a step S202. If not (NO in step S200), the processing returns to step S200 for waiting for the reception of coordinate data from the user's terminal.

In step S202, CPU 120 transforms the coordinate data on the display area received in step S200 into the coordinate data on the map data. For example, it is assumed that the user has the user ID of "11223344", the terminal ID is "P001", and the display area is "Nara station and neighborhood". In this case, when (550, 120) is detected as coordinate data of the clicked position from the user's terminal, CPU 120 performs the coordinate transformation on the coordinate data based on the display area (Fig. 3) corresponding to the terminal ID of "P001" in the user information and the coordinate data (Fig. 4) of the display area of "Nara station and neighborhood". Thereby, the coordinate data of the clicked position is transformed into the coordinate data of (135.4826, 34.4124) on the map data.

In a step S204, CPU 120 retrieves the registered theme based on the calculated coordinate data on the map. This retrieval is performed based on the coordinate-transformed coordinate data and the coordinate data (Fig. 5) of the theme information. In this processing, if the theme icon is represented by the square information, the theme registered within the square region is retrieved. If the theme icon is represented by the point information, the theme registered in a region within the predetermined distance from the point coordinate is retrieved.

In a step S206, CPU 120 determines whether the registered theme is retrieved or not. If the registered theme is retrieved (YES in step S206), the processing moves to a step S208. If not (NO in step S206), the processing moves to a step S214.

In step S208, CPU 120 sends data for displaying a menu screen of an article, which relates to the theme retrieved in step S204, on the map information by the user's terminal.

In step S210, CPU 120 determines whether a read request for the article based on the menu is received from the user's terminal or not. When the read request is received from the user's terminal (YES in step S210), the processing moves to a step S212. If not (NO in step S210), the processing moves to a step S212. If not (NO in step S210), the processing moves to a step S220.

In step S212, CPU 120 reads the article data from fixed disk 124 based on the read request received in step 5210, and sends the article data to the user's terminal,

In step S214, CPU 120 determines that the request for entry of the new theme is detected when the registered theme is not retrieved (NO in step 5206).

In a step S216, CPU 120 determines whether a new theme name and coordinate data representing the region information such as square information corresponding to the new theme are received or not. If the new theme name and the coordinate data such as square information are received (YES in step S216), the processing moves to a step S218. If not (NO in step S216), the processing returns to step S216 for waiting for reception of the new theme name and the coordinate data such as square information. If the theme icon is represented by the point information, the clicked point, which is detected in step S200, provides the point coordinates so that it is not necessary to receive further coordinate data.

In step S218, CPU 120 registers the new theme name based on the received new theme name and the coordinate data. In this processing, the received coordinate data represents the position on the display area of each of the user's terminals. Similarly to the processing in step S202, therefore, the coordinate transformation is effected on the received coordinate data based on the coordinate data (Fig. 3) of the display area of the user information and the coordinate data (Fig. 4) of the display area.

In a step S220, CPU 120 determines whether a request for submission of the article is received from the user's terminal or not. This determination is performed by receiving the submission request and the submitted information from the user's terminal. When the submission request is received from the user's terminal (YES in step S220), the processing moves to a step 5222. If not (NO in step S220), the processing moves to a step S224.

In step S222, CPU 120 stores a submitted article, which is the submitted information received in step S220, as an additional article for the registered theme.

In a step S224, CPU 120 determines whether an end request is received from the user's terminal. If the end request is received from the user's terminal (YES in step S224), the information display processing ends. If not (NO in step S224), the processing returns to step S200, and a series of processing is performed again.

When the end request is received in step S224 (YES in step S224), fixed disk 124 stores the display area, which is sent last from the user's terminal to the server apparatus. The information of the display area will be used in step S106 during the next map information display processing.

Based on the structures and flowcharts described above, the server apparatus operates as described below.

### [Map Display Operation]

When the user having the registered ID sends the user ID, terminal ID and map display request to the server apparatus via the terminal bearing the registered terminal ID, the server apparatus receives them (YES in step S100). The user enters the display area via the terminal. The entered data of the display area is sent to the server apparatus, and the server apparatus receives the information (YES in step S102). Based on the coordinate data of the display area received from the user's terminal, the server apparatus reads the map data from fixed disk 124 (S104). Based on the coordinate data of the display area and the coordinate data of the theme information, the registered theme is retrieved (S 108). If the user did not enter the display area, the map information, which was displayed last, is read (S106).

Based on the display area of the terminal ID received together with the user ID, the coordinate transformation is effected on the map data and the coordinate data of the registered theme (S110). Data for displaying the map information and the theme icon representing the registered theme on the user's terminal are sent to the user's terminal.

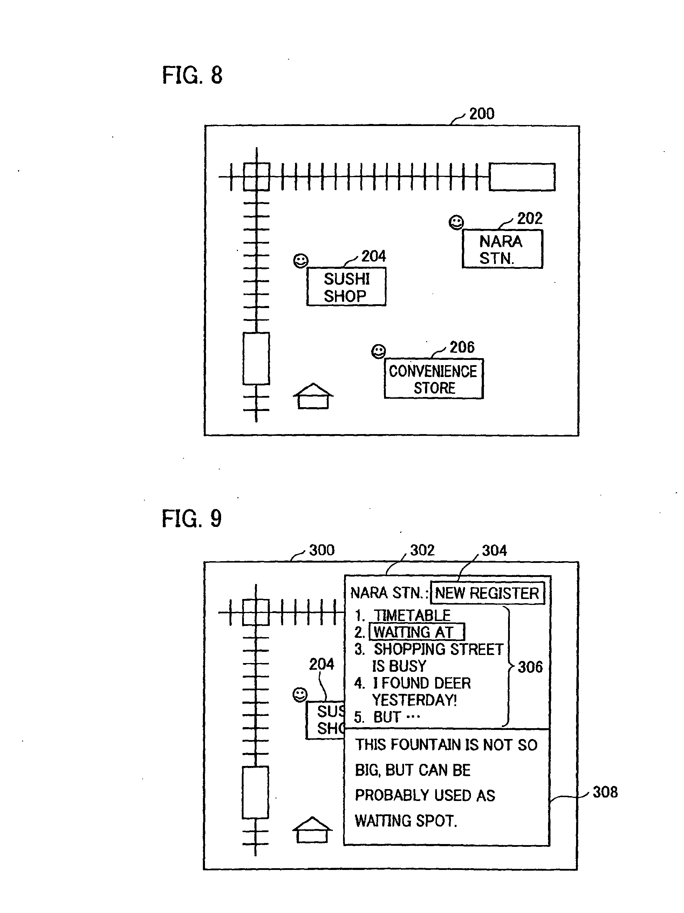

By the operations of the server apparatus described above, the user's terminal displays map information 200 as shown in Fig. 8. According to the map information, the user's terminal displays a theme icon 202 representing the registered theme of "Nara station", a theme icon 204 representing "sushi shop" and a theme icon 206 representing a "convenience store" at corresponding positions on the map information, respectively. The theme names displayed in theme icons 202 - 206 correspond to the theme names (Fig. 5) of the theme information, respectively.

### [Information Display Operation]

When the map information is displayed on the user's terminal as shown in Fig. 8, the user clicks theme icon 202 relating to "Nara station". The coordinate data of the clicked position is sent to and detected by the server apparatus (YES in step 5200). The coordinate data of the clicked position on the terminal is transformed into coordinate data on the map data (S202), and the registered theme (Fig. 5) of the theme information is retrieved based on the transformed coordinate data (S204). If the registered theme is present (YES in step S206), data for displaying the menu of the article relating to the retrieved theme over the map information is sent (S208). By the above operations, the map information shown in Fig. 8 is converted into the map information shown in Fig. 9. In this case, since the user clicked theme icon 202 relating to "Nara station", contents of the theme corresponding to the theme ID of "002" and theme name of "Nara station" are displayed. As shown in Fig. 9, an article display portion 302 includes a new article register button 304 for newly registering an article in connection with the theme name of "Nara station", and also includes a menu display portion 306 displaying a list of articles already registered in connection with the theme name of "Nara station".

When the user clicks one item in the menu displayed on menu display portion 306, the request for reading the article is sent to the server apparatus, and the server apparatus receives the read request of the article (YES in step S210). Based on the received read request, the server apparatus reads the article data (Fig. 5) from the theme information stored on fixed disk 124, and sends it to the user's terminal (S212). By these operations, the user's terminal displays contents of the article on a submitted article display portion 308.

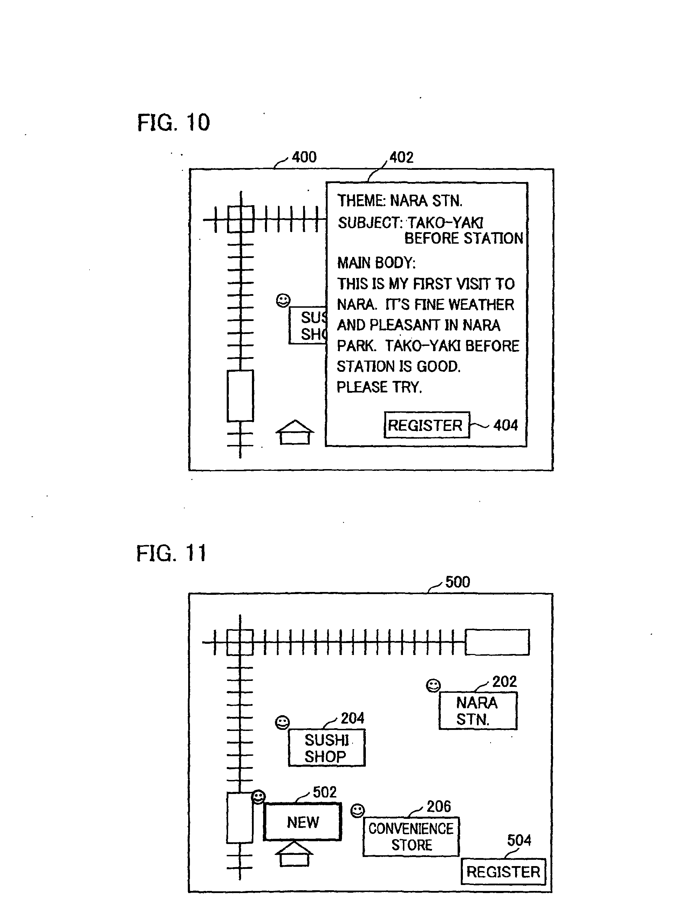

When the user clicks new register button 304 in the state where the map information shown in Fig. 9 is displayed, an article entry portion 402 for submission shown in Fig. 10 is displayed. The user can enter the theme name, subject and main body in article entry portion 402 for submission. By clicking a register button 404, the entered article is sent to the server apparatus. When the user clicks register button 404 after entering the article in article information entry portion 402 on the user's terminal, the user's terminal sends the submission request to the server apparatus, and the server apparatus receives the submission request (YES in step S220). The server apparatus stores the submitted article received thereby on fixed disk 124 while keeping a relationship with the registered theme ID.

When the user clicks a portion other than theme icons 202 - 206 in the state where the map information shown in Fig. 8 is displayed, it is determined that the registered theme corresponding to the clicked coordinate data is not present (NO in step S206). In this state, the user's terminal displays map information 500 shown in Fig. 11, and also displays a new theme icon 502 other than theme icons 202 - 206 already registered. For this new theme icon 502, the user enters a theme name and coordinate data (if the theme icon is represented, e.g., by square information), and clicks a register button 504. The user's terminal sends a request for the new theme to the server apparatus. The server apparatus receives the new theme name and coordinate data (YES in step S216). The server apparatus registers the new theme bearing a new theme ID based on the received new theme name and coordinate data, and stores it on fixed disk 124.

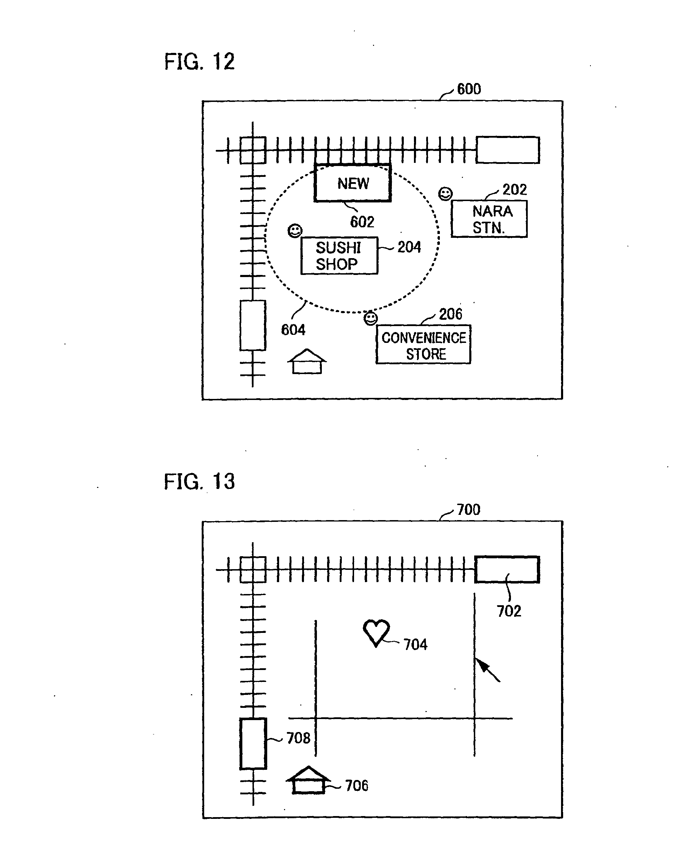

As shown in Fig. 11, the new theme icon can be displayed in the square form already described. Also, as shown in Fig. 12, it may be displayed by a combination of a square theme icon 602 and a region 604 within a predetermined distance from theme icon 602. In either of the cases shown in Figs. 11 and 12, the type of the coordinate data as well as the coordinate data are stored corresponding to the type of display of the theme icon.

After the new theme is registered, a user can submit an article relating to the new theme. For this, article entry portion 402 shown in Fig. 10 is displayed subsequent to the registration of the new theme.

When the user clicks an end request button on the map information shown in Figs. 8 - 12, the end request is sent to the server apparatus from the user's terminal. The server apparatus receives the end request (YES in step S224), and the information display operation ends.

As already described with reference to Figs. 8 - 12, the graphics representing the theme includes the graphic data, e.g., of a square form and the data name. However, only an icon represented by a pattern or a symbol may be used as shown in Fig. 13. For example, map information 700 is superimposed, and theme icons 702 - 708 each formed of the pattern or symbol are located at the positions of the themes already registered, and are displayed over map information 700. When one of theme icons 702-708 is clicked, the theme name, corresponding menu and others are displayed.

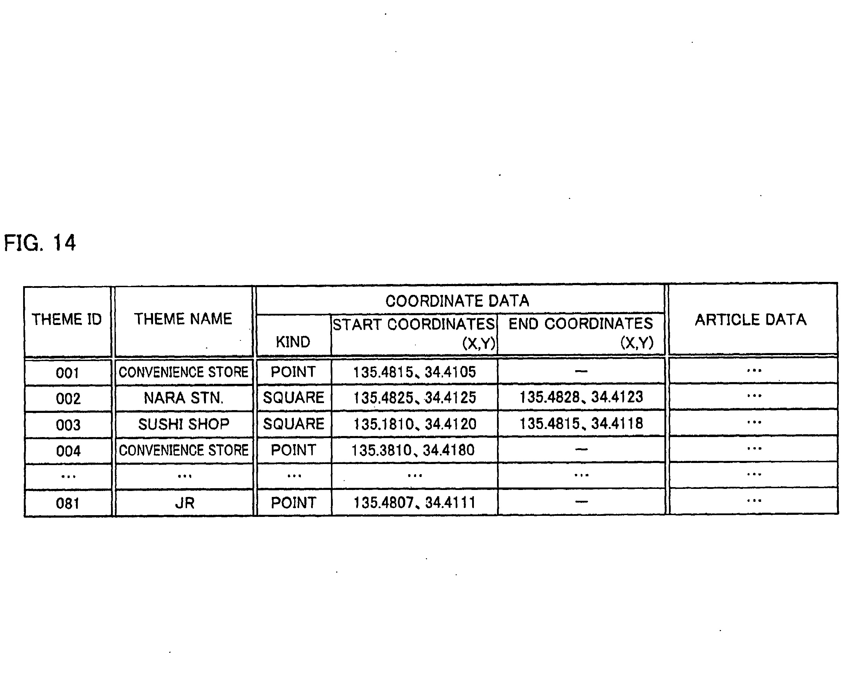

As shown in Fig. 14, when the new theme is registered by the processing shown in Fig. 11 or 12, the theme information stored on fixed disk 124 is changed from the state shown in Fig. 5 to the state shown in Fig. 14. Thus, the new theme adding operation newly stores a theme bearing the theme ID of "081" and the theme name of "JR" at the position of coordinate data of (135.4807, 34.4111).

In the above manners, the server apparatus according to the embodiment prepares the coordinate data related to the theme ID as well as the article data related to the theme ID. The server apparatus retrieves the theme ID based on the coordinate data designated by the user, and sends the article data based on the retrieved theme ID to the terminal. On the terminal, the user can read the article submitted by another user. Consequently, it is possible to provide the server apparatus for providing to the terminal the submitted articles, which are related to the coordinate data on the map and are required by the user, based on the position information required by the terminal.

### <Second Embodiment>

A server apparatus according to a second embodiment includes the same functions as the server apparatus according to the first embodiment, and additionally includes a function of distributing article data or the like submitted from a user to other users in accordance with predetermined conditions. This function is achieved by software, which is executed by the computer hardware and CPU 120 shown in Fig. 2. Description will now be given on the server apparatus according to the second embodiment. However, the hardware structures and the flow of processing other than those described below are substantially the same as those of the first embodiment already described, and therefore, description thereof is not repeated.

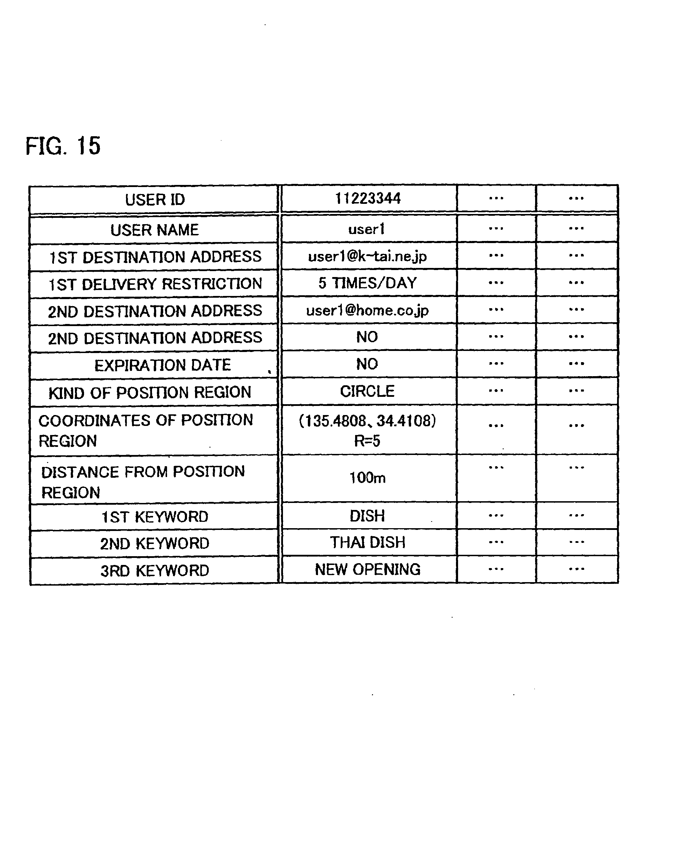

User information stored on fixed disk 124 is different from that in the first embodiment. Referring to Fig. 15, the user information includes a user name and a destination address for each user ID. As shown in Fig. 15, a first destination address of "user1@k-tai.ne.jp'', which restricts the maximum times of delivery to five times per day, and a second delivery address of "user1@home.co.jp" without a delivery restriction are set for the user of the user ID of " 11223344". It is set that the above delivery conditions are valid without a time limit.

Delivery conditions concerning registration of a new theme and submission of a new article are set in the user information. The delivery conditions relate to regions within a distance from 5 to 100 meters from a center define by the longitude and latitude information of (135.4808, 34.4108). When the new theme is set in the region within the above distance, or when the new article data is submitted in connection with the registered theme located within the distance of 100 meters, the newly set theme or newly submitted article is delivered in accordance with the foregoing delivery conditions.

When the new article is submitted for the registered theme, the article data is delivered in accordance with the foregoing delivery conditions if the submitted article contains a first keyword "dish", a second keyword "Thai dish" and a third keyword "new opening".

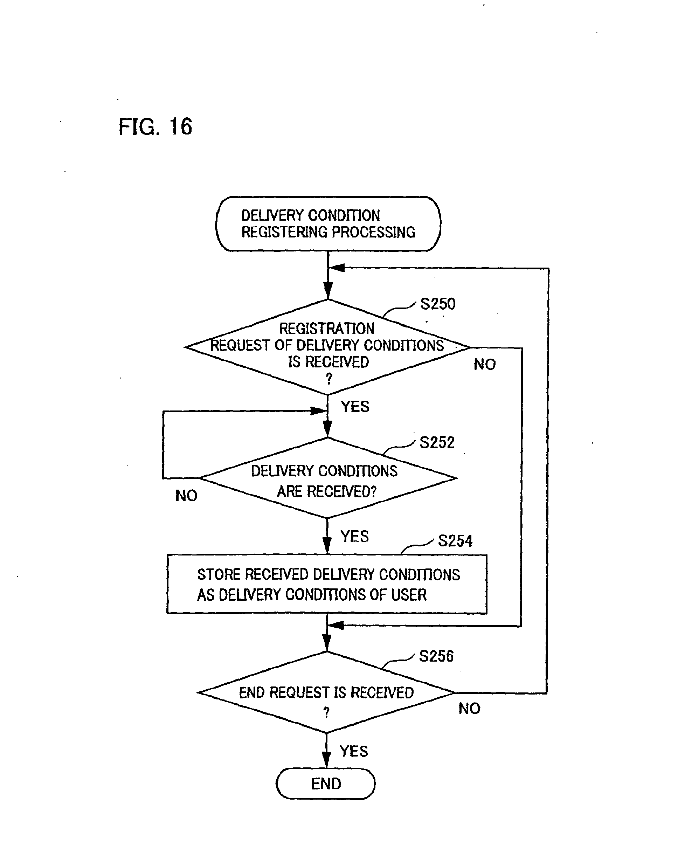

Referring to Fig. 16, the program, which is executed in the server apparatus according to the embodiment, has the following control structure in connection with the delivery condition registering processing.

In a step S250, CPU 120 determines whether the user ID, terminal ID and the registration request of the delivery conditions are received or not. If the user ID, terminal ID and the registration request of the delivery conditions are received from the user's terminal (YES in step S250), the processing moves to a step 5252. If not (NO in step S250), the processing moves to a step S256. If the user ID, terminal ID and the registration request of the delivery conditions are received (YES in step S250), CPU 120 sends the data for displaying the delivery condition entry screen on the user's terminal determined by the user ID and terminal ID to the terminal.

In a step S252, CPU 120 determines whether the delivery conditions are received from the user's terminal or not. If the delivery conditions are received from the user's terminal (YES in step S252), the processing moves to a step 5254. If not (NO in step S250), the processing returns to step S252 for waiting for reception of the delivery conditions from the user's terminal.

In step S254, CPU 120 stores the delivery conditions, which are received in step S252, as the delivery conditions of this user on fixed disk 124.

In step S256, CPU 120 determines whether the request for ending the processing of registering the delivery conditions sent from the user's terminal is received or not. If the request for ending the processing of registering the delivery conditions sent from the user's terminal is received (YES in step S256), this delivery condition registration processing ends. If not (NO in step S256), the processing returns to step S250 for processing next registration of the delivery conditions.

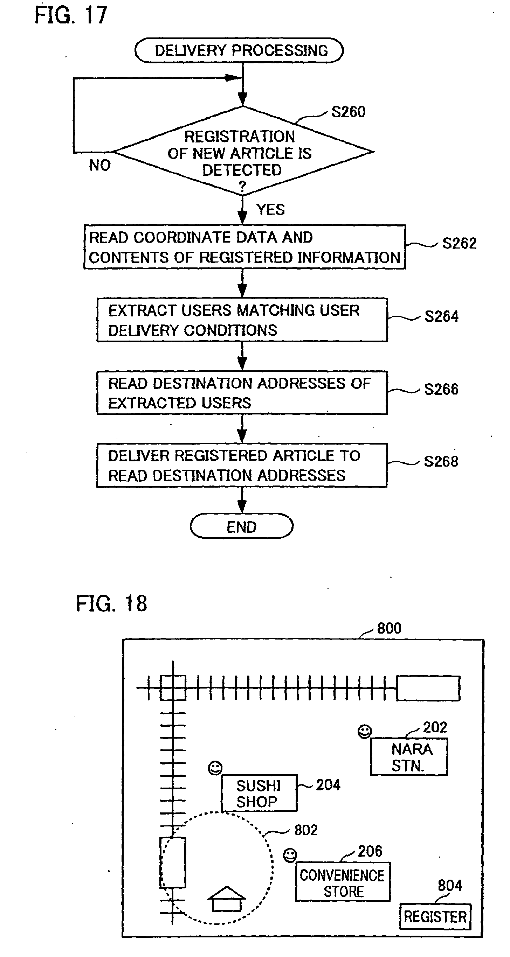

Referring to Fig. 17, the program executed by the server apparatus has the following control structure in connection with the delivery processing.

In a step S260, it is determined whether a new theme is registered or not, or whether a new article is submitted for the registered theme or not, as already described in connection with the first embodiment. If the registration of the new theme or the submission of the new article is detected (YES in step S260), the processing moves to a step S262. If not (NO in step S260), the processing returns to step S260 for waiting for the registration of the new theme or the submission of the new article.

In step S262, CPU 120 reads the coordinate data relating to the newly registered theme or newly submitted article, which is detected, as well as the contents thereof from fixed disk 124.

In a step S264, CPU 120 extracts the users each matching the delivery conditions dedicated to the user based on the contents thus read. This determination is performed based on the coordinate data corresponding to the registered new theme or submitted new article as well as the position region and the distance (Fig. 15) from the position region, and particularly is performed based on whether the coordinate data satisfies the delivery conditions or not. Base on the contents of the registered information and the keyword (Fig. 15), it is determined whether the contents of the information satisfy the delivery conditions or not. It is also determined whether the delivery restriction conditions such as restrictions on the maximum times of delivery per day are satisfied or not. Thereby, the users, to which the fact of registration of the new theme or the submitted new article is delivered, are extracted.

In a step S266, CPU reads destination addresses of the extracted users. For example, delivery to the user bearing the user ID of "user1" illustrated in Fig. 15 is restricted so that the delivery to the first destination address cannot be performed for more than five times per data. In this case, sixth delivery on the same day is made to the second destination address.

In a step S268, CPU 120 delivers the newly registered theme name or the newly submitted article to the destination addresses read in step S266.

Based on the foregoing structures and flowcharts, the server apparatus operates as follows.

### [Delivery Condition Registering Operation]

As shown in Fig. 18, while map information 800 is being displayed on the user's terminal, the user designates a region 802, and clicks a register button 804 so that the information is sent to the server apparatus, and the server apparatus detects the request for registration of the delivery conditions (YES in step S250). In this operation, the user ID and the terminal ID are sent to the server apparatus.

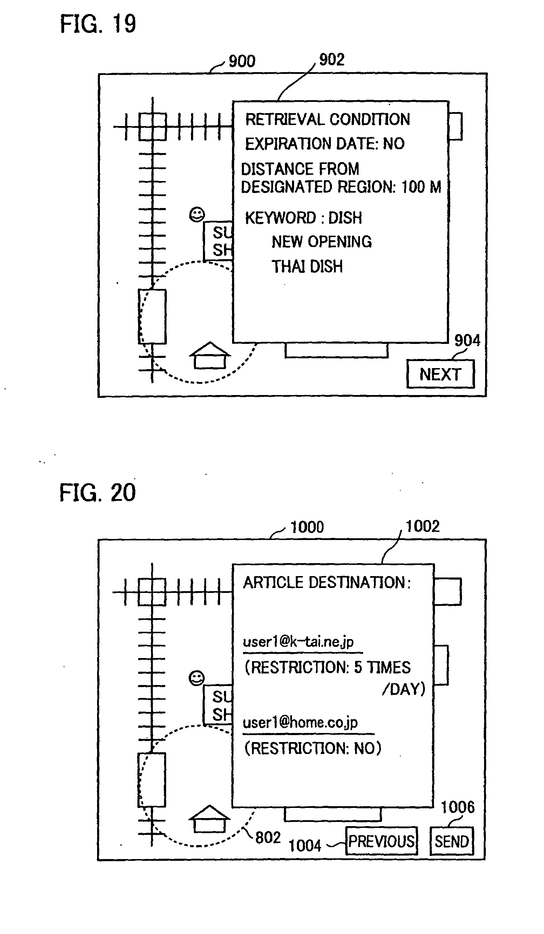

On the user's terminal, the display in Fig. 18 changes to the display in Fig. 19 based on the data received from the server apparatus. As shown in Fig. 19, a retrieval condition entry portion 902 is displayed on map information 900. The user enters an expiration date, a distance from the designated region and a retrieval keyword in retrieval condition entry portion 902, and clicks or touches a "NEXT" button 904. The display changes as shown in Fig. 20 so that a portion 1002 for entering the destination of the article is displayed. On map information 1000, a "PREVIOUS" button 1004 for returning to the previous screen and a "SEND" button 1006 for sending the conditions to the server apparatus are displayed. When the user enters the destination address and the delivery restriction in destination entry portion 1002, and clicks "SEND" button 1006, the information is sent to the server apparatus. The server apparatus detects the reception of the delivery conditions (YES in step S252). If the user wants to change the expiration date of the delivery conditions, retrieval keyword or the like, "PREVIOUS" button 1004 is clicked so that the previous screen shown in Fig. 19 is displayed again, and retrieval condition entry portion 902 is displayed again.

The server apparatus handles the received delivery conditions as the delivery conditions of this user, and stores them as the user information (Fig. 15) on fixed disk 124 (S254).

### [Delivery Operation]

If either the operation of registering the new theme (i.e., the operation already described with reference to Figs. 11 and 12 and in connection with the first embodiment) or the operation of additionally registering the article (i.e., the operation already described with reference to Fig. 10 and in connection with the first embodiment) is performed, the server apparatus detects the registration of the new theme or the new article (YES in step S260). The server apparatus reads the coordinate data and contents of the registered information (S262), and extracts the users satisfying the delivery conditions illustrated in Fig. 15 (S264). When the users are extracted, the destination addresses of the extracted users are read (S266). In this operation, if the plurality of destination addresses are present, the destination addresses are selected in view of the predetermined upper limit of the times of delivery, and are read. The registered new theme and the submitted new article are delivered to the destination addresses thus read (S268).

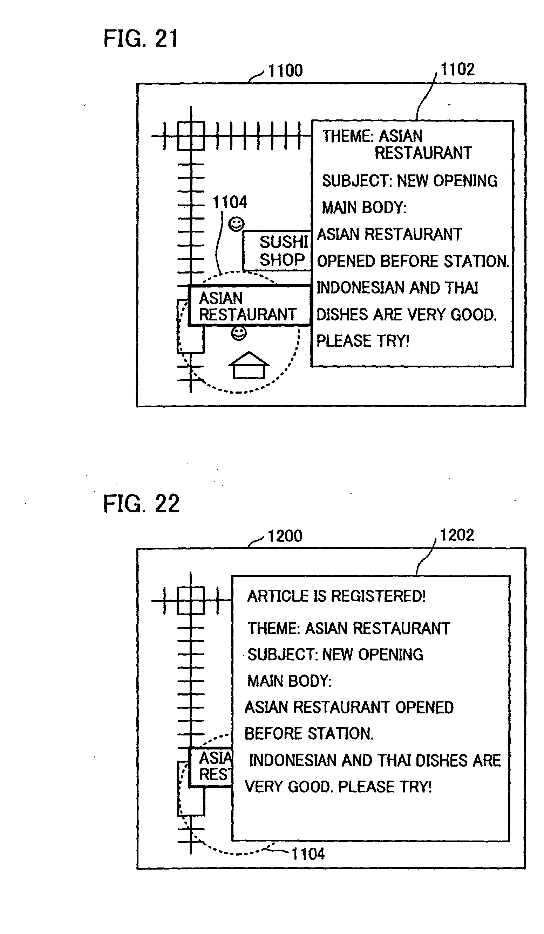

As shown in Fig. 21, a certain user registers a new theme of "Asian restaurant" in a region 1104, and enters an article in an article entry portion 1102 for submission. Since the new theme and the new article were entered in region 1104, this article is sent to the user's terminal, in which the conditions for delivering the article are set. As shown in Fig. 22, an article display portion 1202 for displaying the delivered article is displayed on map information 1200 of the terminal, and contents of the article are displayed in article display portion 1202.

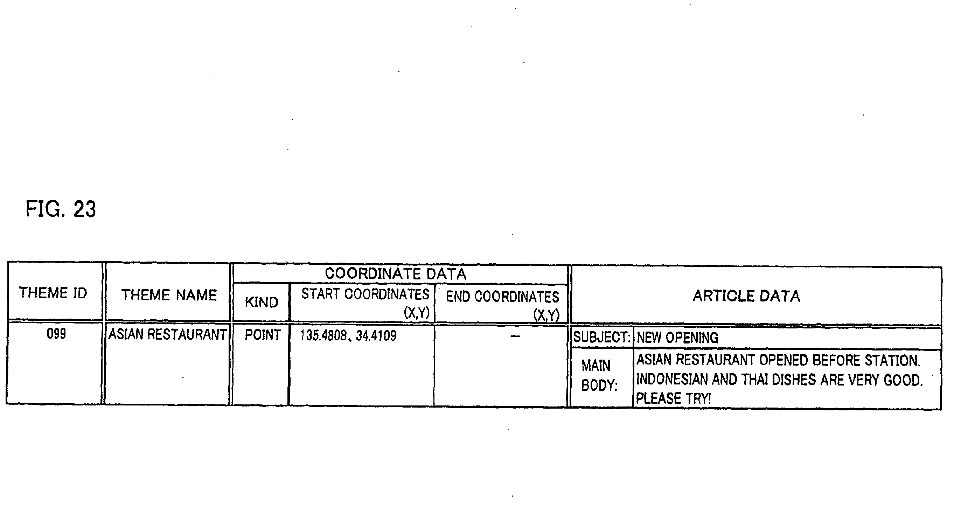

When the new theme and the new article corresponding to this new theme are submitted as shown in Fig. 21, the theme information is stored on fixed disk 124 as illustrated in Fig. 23.

In this embodiment, the conditions for delivering the article are set by the registering operation of the user itself already described with reference to Figs. 19 and 20. However, this is not restrictive. For example, the above conditions can be automatically set in accordance with the theme icon, which is selected by the user in the first embodiment. If the user requests to read a theme, it is determined that the user is interested in this theme, and the delivery conditions are automatically set in connection with this theme. For example, the coordinate data in the delivery conditions may be automatically set based on the coordinate data corresponding to the theme, of which reading is requested. Also, keywords occurring frequently may be extracted from the article submitted for the theme, of which reading is requested, and the retrieval conditions may be automatically set based on the keywords thus extracted.

If the user's terminal has a GPS function, the current position obtained from the GPS and the user ID may be sent to the server apparatus, and the delivery conditions may be automatically prepared using the current position of the terminal as a designated region in the delivery conditions. Thereby, if a new article is submitted for the theme, which is set at the vicinity of the user's terminal, in accordance with the delivery conditions based on the position information, which is sent using the GPS function, this article is sent to this terminal. Thereby, the user, who is on the road with the terminal, can automatically receive the information related to the current location of the user.

In the foregoing manner, when another user submits a new article, the server apparatus according to the embodiment delivers this new article to the user's terminal in accordance with the predetermined delivery conditions. Thereby, it is possible to provide the server apparatus, which can provides the article data, which is submitted by another user, to the user.

### <Third Embodiment>

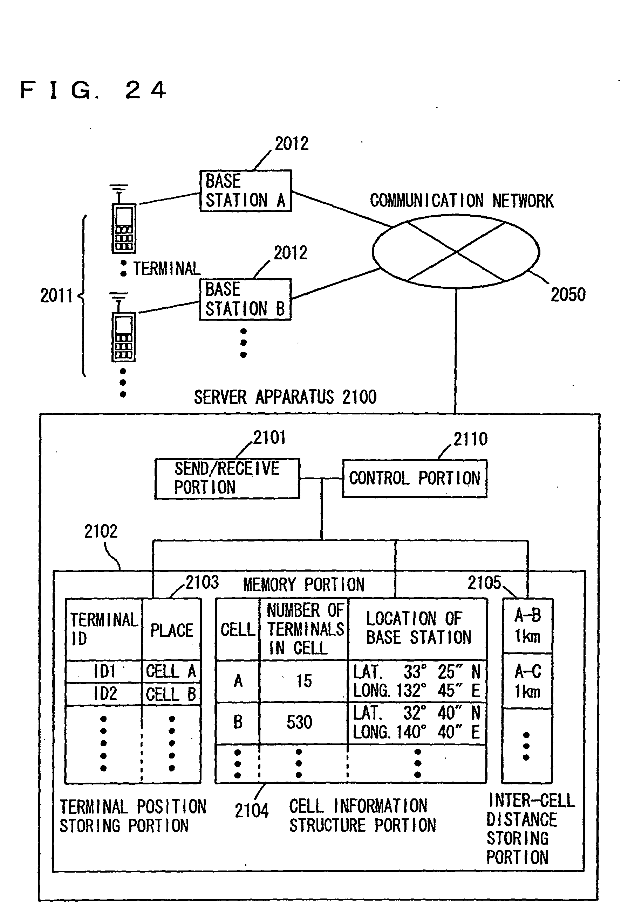

Fig. 24 shows a whole structure of the communication system according to a third embodiment of the invention. Referring to Fig. 24, the communication system according to the third embodiment includes a server apparatus 2100 and a plurality of terminals 2011, which are connected over a network 2050. Server apparatus is achieved by the computer system similarly to the first embodiment already described.

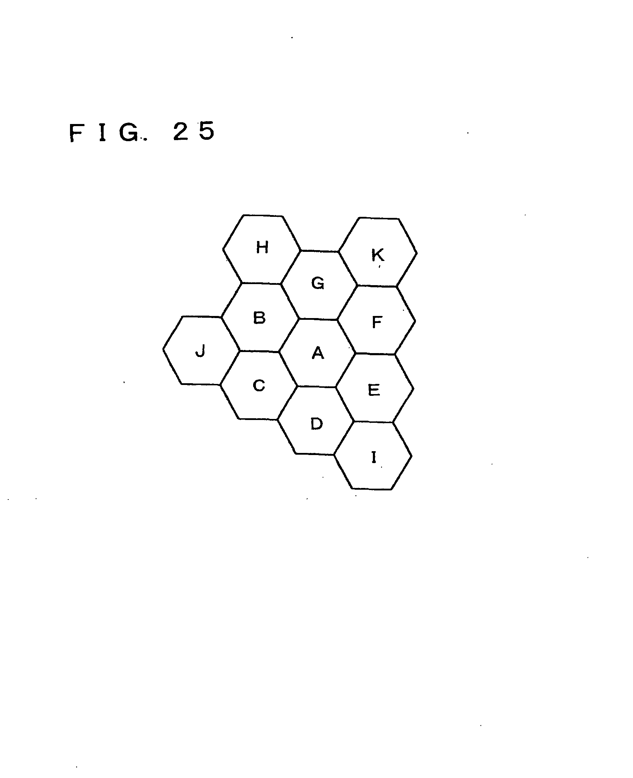

Terminal 2011 is connected to network 2050 via a base station 2012. Relationships between base station 2012, cell and terminal 2011 will now be described. Fig. 25 is a diagram showing cells for illustrating such relationships. According to the cell system, which is widely used for communication between cellular phones, a service area is divided into many small areas called cells. A base station is arranged in each cell. In Fig. 25, base stations are arranged in cells A - K, respectively. In the following description, each cell and the base station arranged therein bear the same character.

The terminal in cell A is connected to network 2050 via base station A, and the terminal in cell B is connected to network 2050 via base station B. Likewise, the terminals arranged in cells C - K are connected to network 2050 via corresponding base stations C - K, respectively. Accordingly, the position of the terminal can be determined on a cell-by-cell basis if the base station, which connects the terminal to network 2050, is determined.

Referring to Fig. 24 again, server apparatus 2100 connected to network 2050 includes a send/receive portion 2101 for sending and receiving information to or from the terminal, a memory portion 2102 for storing the received information, and a control portion 2110 for controlling the whole apparatus.

The send/receive portion 2101 receives the terminal ID for identifying the terminal and the position information of the terminal, which are sent over network 2050. When send/receive portion 2101 recognizes the establishment of communication, it sends information for notification about it to the terminal.

Memory portion 2102 includes a terminal position storing portion 2103 for storing the position of the terminal, a cell information storing portion 2104 for storing the information of the cell, and inter-cell distance storing portion 2105 for storing distances between the cells.

The terminal position storing portion 2103 stores the terminal IDs and the position information (i.e., information of cells containing the respective terminals) while keeping a corresponding relationship between them. Terminal 2011 periodically sends the information about the cell containing it together with the terminal ID. By receiving them, the contents stored in terminal position storing portion 2103 are updated.

Cell information storing portion 2104 stores the number of the terminals located in each cell and the position information of the base station in the cell. Based on the cell information stored in terminal position storing portion 2103, control portion 2110 calculates the number of terminals belonging to each cell. The position information of the base station is stored in advance corresponding to each cell.

Inter-cell distance storing portion 2105 stores the distances between the cells corresponding to the cell information. The distance between the cell is defined by a distance between the base stations belonging to the cells, respectively. More specific description will now be given with reference to Fig. 25.

Referring to Fig. 25 again, it is assumed that the base station is arranged at the center of each cell, and each cell has the same sizes as the others. Base station A in cell A is spaced from each of base stations in cells B - G neighboring to cell A by an equal distance. It is assumed that base station A is spaced by one kilometer from each of base stations B - G. Each of the cells is spaced by one kilometer from each of the neighboring cells.

Base station A in cell A is spaced by the square root of 3 from each of the base stations, which are located in cells H - K each spaced from cell A with one cell therebetween. Likewise, the distance between these cells is defined by the distance between the centers of the cells. In practice, the distance between the cells is obtained from the position information of the base stations stored in cell information storing portion 2104.

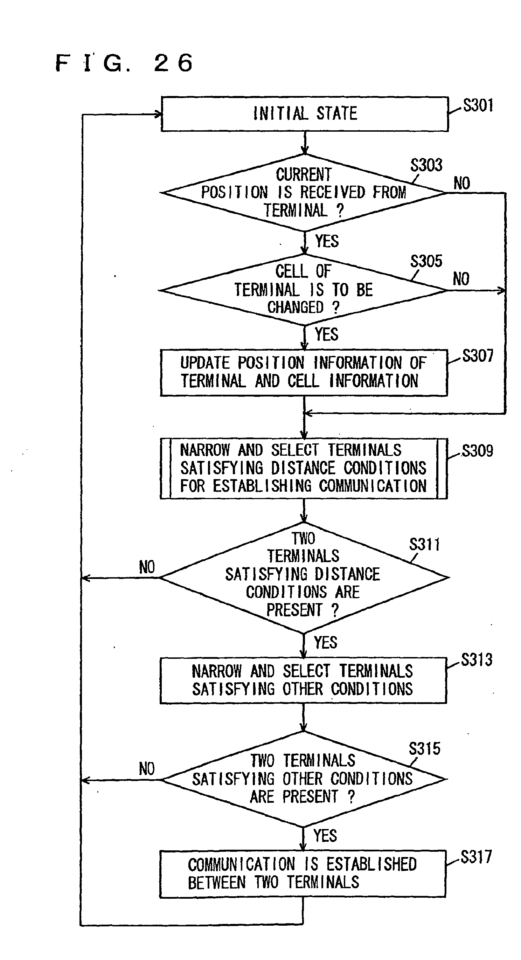

Referring to Fig. 24, control portion 2110 includes send/receive portion 2101 and memory portion 2102, and entirely controls server apparatus 2100. Referring to Fig. 26, control portion 2110 controls procedures of control of the whole processing as follows.

Fig. 26 is a flowchart illustrating procedures of the control of whole processing of server apparatus 2100. In a step S301, server apparatus 2100 enters a standby (initial) state, and waits for sending of information from terminal 2011. When terminal 2011 sends the current position information and terminal ID, send/receive portion 2101 receives them (YES in step S303).

In a step S305, it is determined whether the cell containing terminal 2011 is to be changed or not. The received position information of terminal 2011 is compared with the position information of the same terminal stored in terminal position storing portion 2103 for determining whether a difference is present between them or not.

If there is a difference (YES in step S305), the position information stored in terminal position storing portion 2103 is updated to the new cell information in a step S307. In accordance with the update of the terminal position information, the number of terminals in the cell, which is stored in cell information storing portion 2104, increases or decreases. If it is determined that the number did not change (YES in step S305), the processing in a step S307 is skipped, and the processing moves to a step S309.

In step S309, narrowing processing is performed to select the terminals satisfying the distance conditions for establishing communication with terminal 2011. In this stage, the potential target terminals for communications are narrowed so that the communication can be established between the terminals within a shorter distance. This narrowing processing will be described later in greater detail.

When the narrowing of the terminals based on the distance conditions ends, it is determined in a step S311 whether two terminals satisfying the distance conditions are present or not. Thus, it is determined whether one or more terminals, which can be a communication target(s) for terminal 2011, is present or not.

If it is determined that the two terminals satisfying the distance conditions are present (i.e., if the terminals serving as the communication targets for terminal 2011 are present), the terminals are narrowed in a step S313 to establish communication by selecting the terminal satisfying other conditions. The other conditions include conditions based on attribute values set in the terminals, conditions in a random form selected on a random basis, time-depending conditions selected at predetermined time intervals and others.

When it is determined in a step S315 that the terminal also satisfying the other conditions is present (YES in step S315), the establishment of communication between the two terminals, which are finally selected by narrowing, is determined in a step S317.

When it is determined in a step S311 that two terminals satisfying the distance conditions are not present, the processing returns to the initial state (standby state) in step S301, and the foregoing processing is repeated. When it is determined in step S315 that the terminal satisfying the other conditions is not present, or when establishment of communication between the two terminals is decided in step S317, the processing returns to step S301.

As described above, server apparatus 2100 first narrows the terminals according to the distance conditions for selecting the potential communication targets. Thereby, it is possible to increase the possibility of establishing communication between persons spaced by a shorter distance.

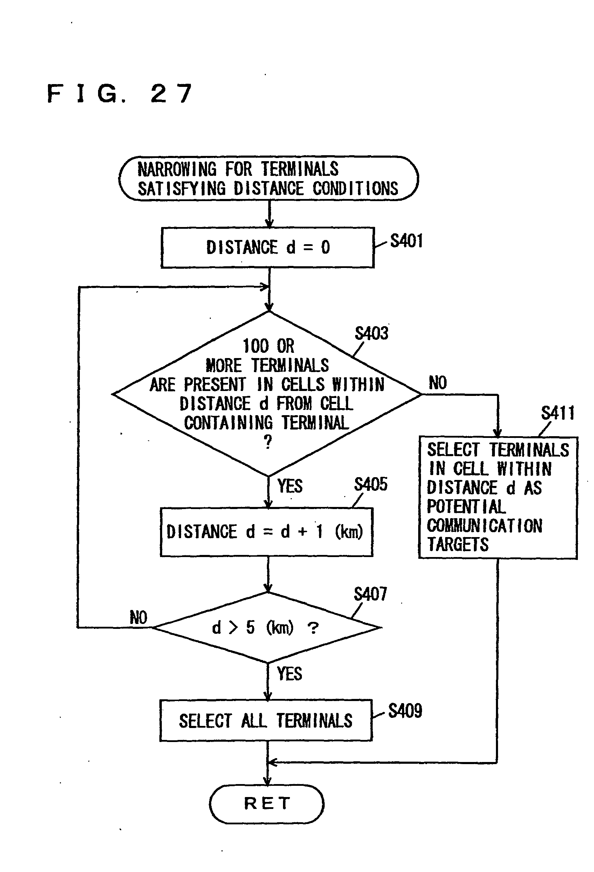

Fig. 27 is a flowchart illustrating the narrowing processing (S309 in Fig. 26) of the terminals for satisfying the distance conditions in greater detail. Referring to Fig. 27, a value of zero is assigned to a distance d in a step S401.

In a step S403, it is determined whether 100 or more terminals are present in the cells within distance d from the cell containing terminal 2011 in question. Since zero was assigned to distance d in S401, it is determined in this stage whether 100 or more terminals are present in the cells within distance d of 0 from the cell containing terminal 2011 or not, and thus whether 100 or more terminals are present in the cell containing terminal 2011 or not.

If it is determined that 100 or more terminals are present (YES in step S403), the processing moves to a step S411, and all the terminals located in the above cell are selected as the terminals having the possibility of establishing communication.

When the terminals located in the cell are fewer than 100 (NO in step S403), the processing moves to a step S405, and distance d is incremented by one kilometer. In a step S407, it is determined whether distance d exceeds 5 kilometers or not.

When distance d is equal to or shorter than 5 kilometers, the processing returns to step S403 for the determining processing, and it is determined whether 100 or more terminals are present in the cells within distance d from the cell containing terminal 2011 in question. If 100 or more terminals are present, these terminals are selected as the potential communication targets in a step S411. If 100 or more terminals are not present, the processing moves to step S405 for further increasing the range.

Distance d is incremented by 1 kilometer, and the processing in steps S403 - S407 is repeated until the terminals increase to 100 or more.

However, when incremented distance d exceeds 5 kilometers (YES in step S407), the processing moves to a step S409, and all the terminals are selected as the terminals having the possibility of establishing communication.

As described above, the range of cells is gradually increased until the number of terminals capable of communication reach a predetermined value or more. Thereby, the number of terminals having the possibility of establishing communication can be substantially kept constant regardless of the position of terminal 2011 in question.

Accordingly, when terminal 2011 is located in a busy place such as shopping or amusement quarters, the terminals serving as potential communication targets are selected, e.g., in the cell containing terminal 2011. In a quiet place such as a suburb, the terminals located in the cells, which are spaced by 5 kilometers or less from the cell containing terminal 2011, are selected as the potential communication targets.

As described above, the range containing the terminals, which can be selected as the communication targets, changes depending on the location of the terminal in question. Thereby, communication can be established between the terminals spaced by a shorter distance.

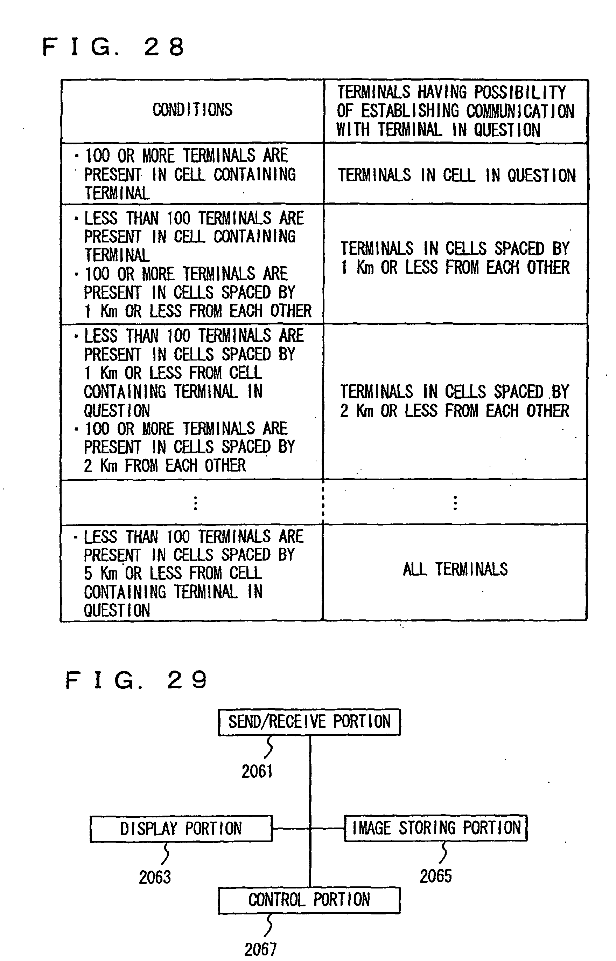

The distance conditions of the terminal in question are present as already described with reference to Fig. 27, and description will now be given on the relationship between such conditions and the other terminals having the possibility of establishing communication with the terminal in question. Fig. 28 illustrates the above relationship. It is assumed that the terminal in question (i.e., a subject terminal) belongs to cell A.

Referring to Fig. 25 and 28, when 100 or more terminals are present in cell A containing the terminal in question, only the terminals present in cell A are selected as the terminal having the possibility of establishing communication.

When the terminals present in cell A containing the terminal in question are fewer than 100, and 100 or more terminals are present in the cells within a distance of 1 kilometer from cell A (i.e., when 100 or more terminals are present in the range including cell A and neighboring cells B - G), all the terminals in cells A - G are selected as the terminals having the possibility of establishing communication.

When the terminals present in cells A - G are fewer than 100, and 100 or more terminals are present in the cells within a distance of 2 kilometers or less from cell A (i.e., 100 or more terminals are present in the range additionally containing cells H - K at a distance of the square root of 3 from cell A), all the terminals present in cells A - K are selected as the terminals having the possibility of establishing communication.

Likewise, the range of the terminals, with which the communication may be established, is increased until the conditions are satisfied. When the terminals fewer than 100 are present in the cells within the distance of 5 kilometers from cell A, all the terminals registered in the server apparatus are selected as the terminals having the possibility of establishing communication.

As described above, the range of the terminals having the possibility of establishing communication is increased for a shorter distance. Therefore, the communication can be established between persons spaced by a shorter distance.

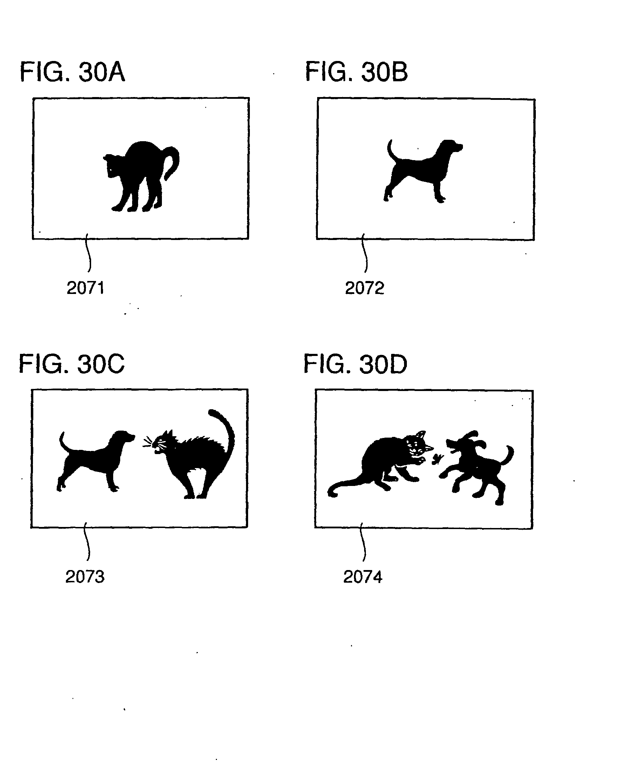

Then, an example of practical communication between the terminals will be described with reference to Figs. 29 and 30A - 30D. Fig. 29 is a block diagram showing a schematic structure of the terminal. Referring to Fig. 29, the terminal includes a send/receive portion 2061 for sending and receiving the data to or from another terminal, an image storing portion 2065 for storing required image information and others, a display portion 2063 for displaying images stored in image storing portion 2065 and images or the like received by the terminal, and a control portion 2067 controlling these portions.

Figs. 30A - 30D show virtual living things displayed on a display 2063 of the terminal. Referring to Fig. 30A, a virtual living thing 2071 is stored in a certain terminal. Referring to Fig. 30B, a virtual living thing 2072 is stored in another terminal.

When communication is established between the terminals, the virtual living thing in each terminal is displayed on the other terminal. For example, virtual living things such as virtual living things 2073 showing a hostile feeling against each other is displayed shown in Fig. 30C. Also, virtual living things such as virtual living things 2074 showing a friendly feeling for each other is displayed shown in Fig. 30D.

The terminal has stored movies (or still pictures) of the virtual living things in image storing portion 2065. When communication is established, control portion 2067 combines the movies received from the other terminal via send/receive portion 2061 with the movies stored in image storing portion 2065, and displays it on display portion 2063. Control portion 2067 sends the movies stored in image storing portion 2065 to the other terminal via send/receive portion 2061. The other terminal receiving the movies displays combined images on display portion 2063.

In this manner, the communication between terminals are established in view of the distance between the terminals.

### <Fourth Embodiment>

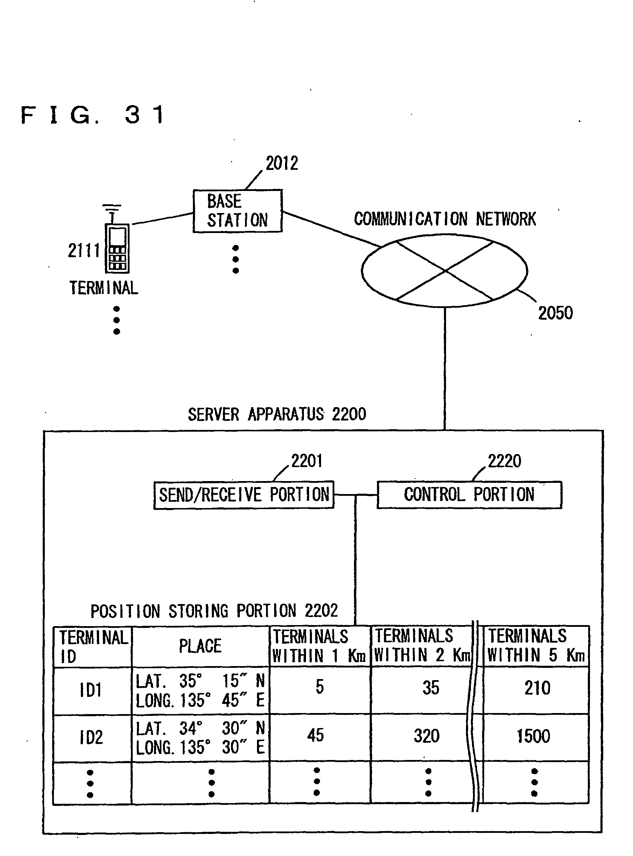

A fourth embodiment of the invention will now be described. Fig. 31 shows a whole structure of a communication system including a server apparatus 2200 in the fourth embodiment of the invention. Referring to Fig. 31, the whole structure of the communication system in this embodiment is substantially the same as that of the whole communication system in the third embodiment shown in Fig. 24. The communication system includes server apparatus 2200 connected to network 2050 as well as a plurality of terminals 2111.

Terminal 2111 and server apparatus 2200 in this embodiment differ in structure from terminal 2011 and server apparatus 2100 in the third embodiment. The fourth embodiment utilizes a GPS instead of the cell system for obtaining the position information of the terminals. Accordingly, terminal 2111 is provided with a GPS receiver for obtaining the position information of the terminal.

This position information differs from the cell information obtained in the third embodiment in that it has an accuracy of several meters. Accordingly, when the position information of the terminal is sent to server apparatus 2200, the position information is stored in position storing portion 2202. Based on the position information of the terminal, a control portion 2220 calculates the number of terminals existing in each of predetermined ranges within various distances from the terminal in question based on the position information of the terminal. Results (the number of terminals) of the calculation are stored in position storing portion 2202 while keeping corresponding relationships with the respective terminals ID.

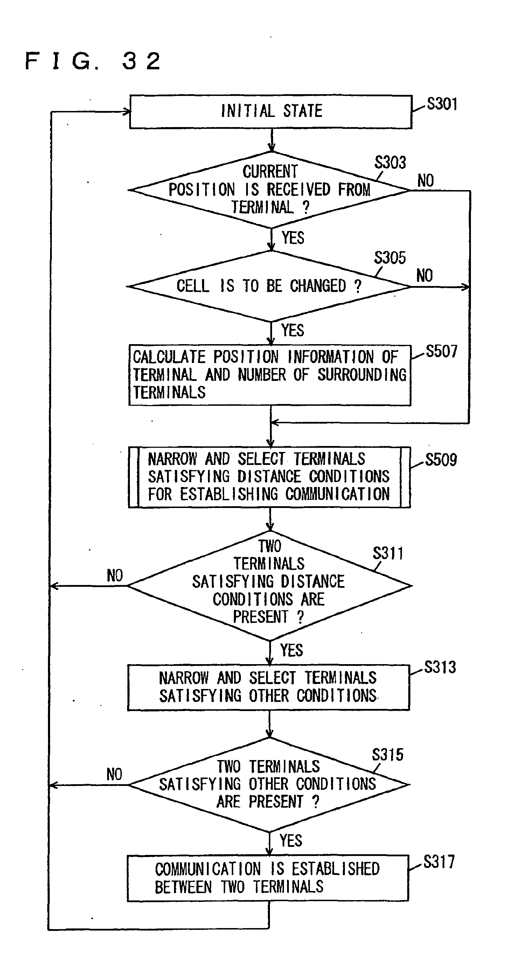

Fig. 32 is a flowchart illustrating procedures of control of the whole processing in server apparatus 2200. This flowchart is substantially the same as the flowchart of Fig. 26. Therefore, description will now be given on only different processing (steps S507 and S509).

In step S507, the position information stored in position storing portion 2202 is updated, and the number of terminals in each distance range is calculated. In step S509, narrowing is performed to select the terminals satisfying the distance conditions for establishing communication.

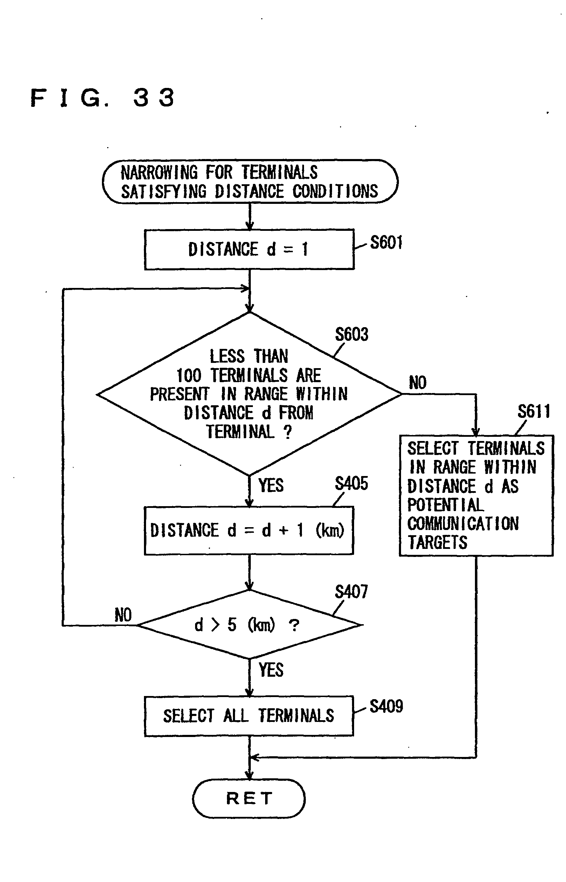

Fig. 33 is a flowchart specifically showing the terminal narrowing processing (S509 in Fig. 32) for satisfying the distance conditions.

Referring to Fig. 33, one kilometer is assigned to distance d in a step S601. In a step S603, it is determined whether 100 or more terminals are present in the range within distance d from the terminal or not. When it is determined that 100 or more terminals are present (YES in step S603), the processing moves to a step S611, and all the terminals present in this range are selected as the terminals having the possibility of establishing communication.

When it is determined that the terminals are fewer than 100 (NO in step S603), the processing moves to steps S405 and S407. Processing other than the above are substantially the same as that in Fig. 27. Thus, distance d is incremented by one kilometer, and the processing from step S603 to step S407 is repeated until the number of terminals increases to or above 100.

When distance d exceeds 5 kilometers (YES in step S407), the processing moves to step S409, and all the terminals are selected as the terminals for communication targets.

As described above, by gradually increasing the range until the number of terminals allowing communication increases to or above a predetermined value, the number of terminals selected as the communication targets can be kept substantially constant independently of the position of the terminal in question.

As compared with the cell system, the system utilizing the GPS can determine the current position of the moving terminal with an accuracy of several meters. Therefore, the areas can be divided more specifically for calculating the number of terminals having the possibility of establishing communication.

In Fig. 24, memory portion 2102 is provided with inter-cell distance information storing portion 2105 for storing in advance the information of distances between cells. However, the structure is not restricted to this. Instead of controlling the number of terminals allowing communication based on the distance between the cells, the control may be performed based on the relative positions of the cells, in which case inter-cell distance information storing portion 2105 stores the information relating to the relative positions of the cells. Instead of providing the storing portion, such a manner may be employed that the distance between the cells or the relative positions are calculated.

The processing from step S401 to step S407 illustrated in Fig. 27 has been described together with specific numerical values. The processing in steps S601, S603, S405 and S407 illustrated in Fig. 33 has been described together with specific numerical values. However, these numerical values are described merely by way of example, and these are not restrictive.

In step S405 illustrated in Figs. 27 and 45, distance d is incremented by predetermined distance d (1 kilometer). However, the processing is not restricted to this. Processing for increasing the distance in another manner may be employed, and a manner of multiplying the distance by a predetermined number may be employed.

If the distance exceeds the predetermined value in step S409 illustrated in Figs. 27 and 33, all the terminals utilizing the service are selected as the potential communication targets. However, the processing is not restrictive to the above. For example, only the terminals located in the cells, which are present within the predetermined distance, may be selected as the potential communication targets.

In step S407 illustrated in Figs. 27 and 33, it is determined whether the distance exceeds the predetermined value or not. However, the processing is not restrictive to this. For example, the processing in steps S403 (S603) and S405 may be repeated until the number of terminals reaches a predetermined value. Thus, the area, in which the terminals serving as the potential communication targets are calculated, may be expanded until the number of terminals reaches the predetermined value.

Further, in step S303 illustrated in Figs. 26 and 32, the terminal periodically sends the position information. However, this is not restrictive. For example, such a manner may be employed that the terminal sends the position information not periodically but whenever the position changes.

In Figs. 26 and 32, the processing in and after step S309 in Fig. 26 and the processing in and after step S509 are performed after step S303. However, the processing is not restricted to this. For example, the above processing may be performed independently of the processing in step S303, and may be performed as the interrupt processing controlled by a timer.

Further, the embodiment has been described in connection with an example, in which communication is established between two terminals. However, this is not restrictive. The communication may be established among three or more terminals instead of two terminals.

### <Fifth Embodiment>

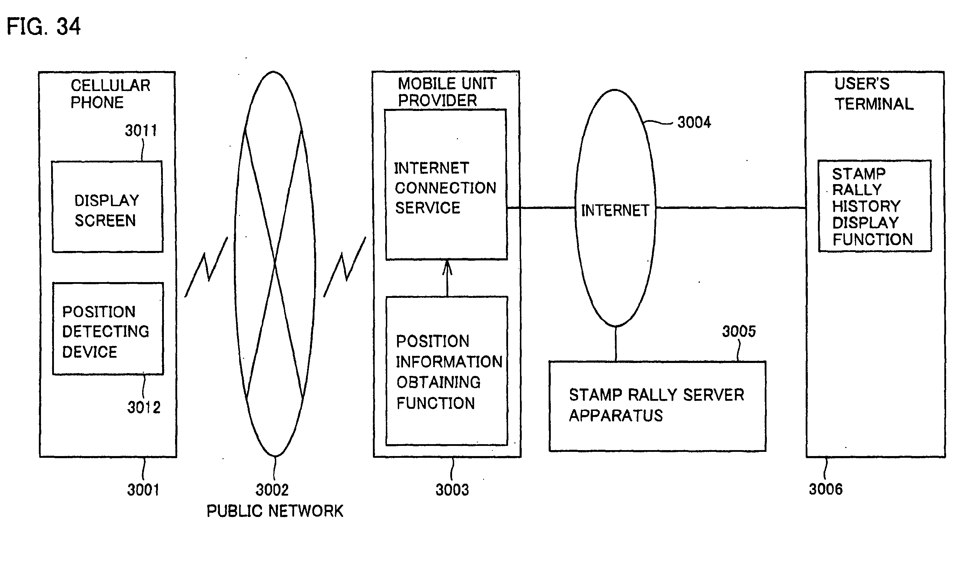

Fig. 34 is a block diagram showing a stamp rally system according to a fifth embodiment of the invention. Description will now be given on the embodiment, in which the invention is applied to the stamp rally, although the invention is not restricted to this.

In this stamp rally system, a user of a cellular phone 3001 is an entrant. When this user reaches one of positions determined according to a scenario of the stamp rally, the position of cellular phone 3001 is detected. The detected position is sent to a stamp rally server apparatus 3005 over a public telephone network 3002, a mobile unit provider 3003 and Internet 3004. Stamp rally server apparatus 3005 stores the received position information of the cellular phone while keeping a corresponding relationship with the plurality of positions in the stamp rally. When all the positions are stored in accordance with the predetermined sequence, the stamp rally ends. The history information of the position stored in stamp rally server apparatus 3005 can be transferred to a user's terminal 3006 over Internet 3004.

Cellular phone 3001 includes a display screen 3011 and a position detecting device 3012. For example, position detecting device 3012 utilizes the GPS, and receives radio waves from a stationary satellite for detecting the position (latitude and longitude) of cellular phone 3001. When the position of cellular phone 3001 is detected, the position information representing this position is sent to stamp rally server apparatus 3005 over public telephone network 3002, mobile unit provider 3003 and Internet 3004.

Mobile unit provider 3003 receives a request from cellular phone 3001 over public telephone network 3002. In response to this request, mobile unit provider 3003 connects cellular phone 3001 to Internet 3004. Mobile unit provider 3003 and stamp rally server apparatus 3005 can be achieved by a server apparatus on Internet 3004 operated, e.g., by a communication company of the cellular phones.

User's terminal 3006 is, e.g., a personal computer, and accesses stamp rally server apparatus 3005 over Internet 3004. User's terminal 3006 can read and display the history information stored in stamp rally server apparatus 3005. On user's terminal 3006, the user can prepare a scenario of the stamp rally. This scenario is sent to stamp rally server apparatus 3005 over Internet 3004, and is stored in stamp rally server apparatus 3005.

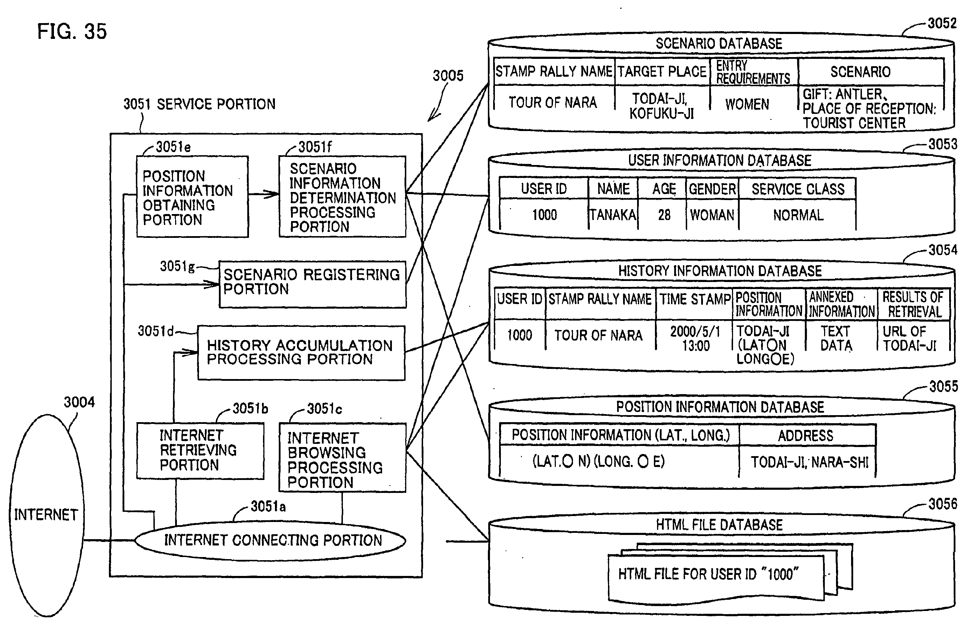

Fig. 35 is a block diagram showing a structure of stamp rally server apparatus 3005. Stamp rally server apparatus 3005 includes a service portion 3051 for performing various kinds of processing, a scenario database 3052 for storing the scenarios of the plurality of stamp rallies, a user information database 3053 for storing information relating to the plurality of users, a history information database 3054 for storing the history information of the respective positions in the stamp rally, a position information database 3055 for storing each position (latitude and longitude) in the stamp rally and each target position while keeping a corresponding relationship therebetween, and a HTML (HyperText Markup Language) file database 3056 for registering texts sent from the plurality of users.

Service portion 3051 includes an Internet connecting portion 3051a for controlling connection to Internet 3004, an Internet retrieving portion 3051b for retrieving contents by a search engine on Internet 3004, an Internet browsing processing portion 3051c for retrieving contents in HTML file database 3056, a history accumulation processing portion 3051d for storing histories of the respective positions in the stamp rally in history information database 3054, a position information obtaining portion 3051e for obtaining the position information received from cellular phone 3001 over Internet 3004, a scenario information determination processing portion 3051f for performing primary processing for proceeding with the stamp rally, and a scenario registering portion 3051g for storing in scenario database 3052 the scenario received from user's terminal 3006 over Internet 3004. Stamp rally server apparatus 3005 is achieved by the computer system similarly to the first embodiment already described.

The processing in the stamp rally is controlled in accordance with the procedures illustrated in the following flowcharts.

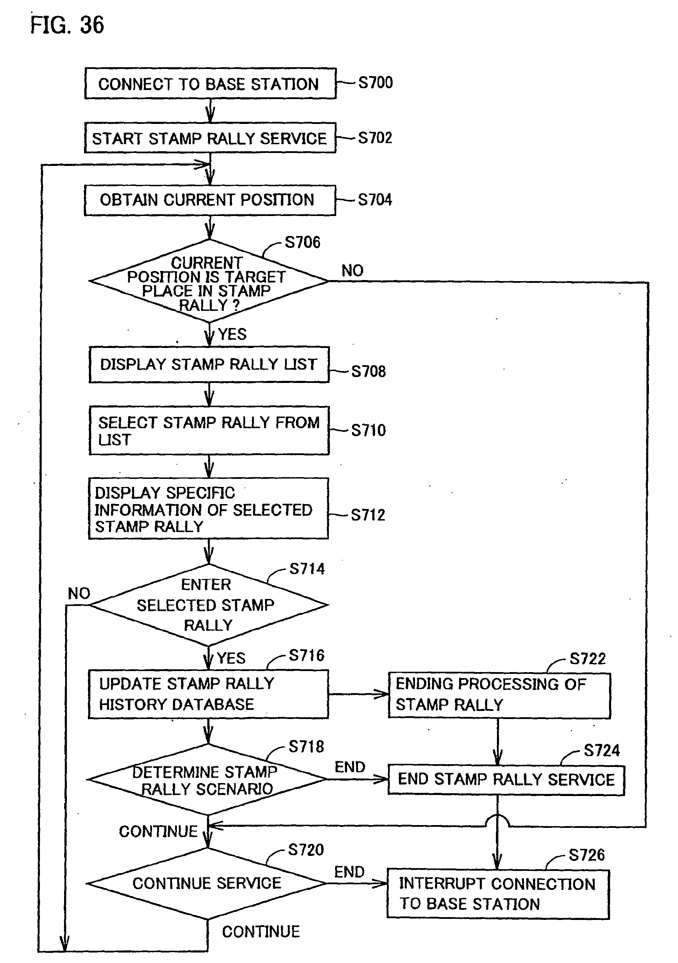

Referring to Fig. 36, cellular phone 3001 requests an access to stamp rally server apparatus 3005 via a radio base station (not shown) and public telephone network 3002 (S700). In response to this, mobile unit provider 3003 connects cellular phone 3001 to stamp rally server apparatus 3005 over public telephone network 3002 and Internet 3004. Thereby, data communication is allowed between cellular phone 3001 and stamp rally server apparatus 3005, and the stamp rally service starts (S703).

Stamp rally server apparatus 3005 requests the current position to cellular phone 3001. In response to this, cellular phone 3001 detects its own position by position detecting device 3012. The position information representing this position and the user ID registered in advance in cellular phone 3001 are sent to stamp rally server apparatus 3005. Stamp rally server apparatus 3005 receives this position information via Internet connecting portion 3051a. Stamp rally server apparatus 3005 provides the received position information to scenario information determination processing portion 3051f, and receives the user ID (5704).

Scenario information determination processing portion 3051f retrieves information from position information database 3055 (S706). If the position of cellular phone 3001 represented by the retrieved position information corresponds to a target place in the stamp rally (YES in step S706), i.e., if cellular phone 3001 is located at a target place in the stamp rally, the target place of the stamp rally is determined. For example, a target place "Todai-ji temple" is obtained from position information database 3055.

In addition to the position represented by the position information, the reference may be made to the position of the radio base station connected to cellular phone 3001. Based on the position of the radio base station, the location of cellular phone 3001 may be determined, and it may be determined whether this location matches the target place in the stamp rally.

Scenario information determination processing portion 3051f retrieves the scenario stored in scenario database 3052, and selects the scenario containing the target place matching the position of cellular phone 3001. Scenario information determination processing portion 3051f reads the user information corresponding to the user ID from user information database 3053. Scenario information determination processing portion 3051f checks the user information against the scenario including the target position, and determines whether the user information satisfies entry requirements of the scenario or not. Scenario information determination processing portion 3051f further selects the scenarios satisfying the entry requirements. For example, if the user information indicates "woman", and "women" is specified in the entry requirements of the scenario, this scenario is selected. Further, scenario information determination processing portion 3051f prepares a list of the scenarios including the names and others of the stamp rallies if there is at least one scenario, which includes the target place matching the position of cellular phone 3001, and has the entrant requirements satisfied by the user information. The list of scenarios is sent from scenario information determination processing portion 3051f to cellular phone 3001 via Internet connecting portion 3051a. When cellular phone 3001 receives this list, the list is displayed on display screen 3011 (S708).

The user of cellular phone 3001 selects the name of the desired stamp rally from the list displayed on display screen 3011 by using entry keys on cellular phone 3001 (S710). Cellular phone 3001 sends the name of the selected stamp rally to stamp rally server apparatus 3005. Stamp rally server apparatus 3005 receives the name of the selected stamp rally via Internet connecting portion 305 1a Scenario information determination processing portion 3051f retrieves the scenario of this stamp rally from scenario database 3052. Scenario information determination processing portion 3051f reads the name of the stamp rally, the target place of the stamp rally and entry requirements. Stamp rally server apparatus 3005 sends them specific information of the stamp rally to cellular phone 3001 via Internet connecting portion 3051a. The specific information of the stamp rally includes, e.g., the stamp rally name "Tour of Nara", stamp rally target places "Todai-ji, Kofuku-ji" and entry requirements "WOMEN" (S712). When cellular phone 3001 receives such specific information of the stamp rally, it displays the specific information on display screen 3011 (S712).

The user of cellular phone 3001 requests the entry in the stamp rally displayed on display screen 3011 by using the entry keys on cellular phone 3001 (S714). Cellular phone 3001 sends this request for the entry to stamp rally server apparatus 3005. Stamp rally server apparatus 3005 receives the entry request for the stamp rally. Scenario information determination processing portion 3051f stores the user ID, stamp rally name, time stamp (entry time) and target place of the stamp rally (i.e., position of cellular phone 3001) in history information database 3054 via history accumulation processing portion 3051d (S716). For example, the user ID "1000", stamp rally name "Tour of Nara", time stamp "2000/5/1 13:00" and the stamp rally target place "Todai-ji temple" are stored in history information database 3054.

Scenario information determination processing portion 3051f determines whether all the target places of the stamp rally, in which the user entered, are stored in history information database 3054 or not (S718). If all the target places are not stored (CONTINUE in step S718), an inquiry about whether the stamp rally service is to be continued or not is sent to cellular phone 3001 via Internet connecting portion 3051a. When cellular phone 3001 receives this inquiry, it displays the inquiry on display screen 3011 (S720).

When the user of cellular phone 3001 instructs the ending of the stamp rally (END in step S720), this instruction is sent to stamp rally server apparatus 3005. In response to this, stamp rally server apparatus 3005 terminates the data communication with cellular phone 3001 (S724). The radio base station on public telephone network 3002 interrupts the communication line to cellular phone 3001 (S726).

Even when the user of cellular phone 3001 stops the joining in the stamp rally during the stamp rally, the user can enter the same stamp rally again if the user starts the processing starting from step S700 after the user moves to another target place of the stamp rally.

For example, if the user restarts the processing starting from step S700 after the user moves to the target place of "Kofuku-ji temple" in the stamp rally of "Tour of Nara", the stamp rally of "Tour of Nara" is displayed in the list on display screen 3011 of cellular phone 3001 in step S708 after the processing in steps S702, S704 and S706. When the user selects stamp rally in step S710, and enters it in step S714, history information database 3054 is updated in step S716. As a result, history information database 3054 newly stores the time of this entry in the form of the time stamp in connection with the user ID of "1000" and the stamp rally name of "Tour of Nara". History information database 3054 newly stores the stamp rally target place of "Kofuku-ji temple".

All the places corresponding to the stamp rally name of "Tour of Nara" stored in scenario database 3052 are stored in connection with the user ID of "1000" and the stamp rally name of "Tour of Nara" in history information database 3054 (YES in step S718). Scenario information determination processing portion 3051f determines that the stamp rally named as "Tour of Nara" is completed, and reads the contents of a reward from scenario database 3052. The contents of reward are sent via Internet connecting portion 3051a. For example, the contents of reward are "Gift: Antler, Place of Reception: Tourist Center". Cellular phone 3001 receives the contents of the reward, and display them on display screen 3011 (S722).

Thereby, the user of cellular phone 3001 can recognize the completion of the stamp rally as well as the gift receiving place. Stamp rally server apparatus 3005 terminates the data communication with cellular phone 3001 (S724), and the base station interrupts the communication line to cellular phone 3001 (S726).

If the position of cellular phone 3001 does not match the target place of the stamp rally in step S706, the processing in steps S706 - S718 is not performed, and the processing moves to a step S720. Likewise, if there is no entry request for the stamp rally, the processing in steps S716 and S718 are not performed, and the processing moves to step S720.

When the continuation of the stamp rally is instructed in step S720, the processing returns to step S704. When the user of cellular phone 3001 moves to the target place of the stamp rally (YES in step S706), the processing starting from step S708 is performed.

According to this embodiment, as described above, the position of cellular phone 3001 is detected. If the detected position matches one of the target places of the stamp rally in scenario database 3052, this target place is stored in history information database 3054. When all the target places in the stamp rally are stored in history information database 3054, it is determined that the stamp rally is completed, and a notification about the place of gift reception is sent to the user of cellular phone 3001.

In this case, the determination about the completion of the stamp rally may be performed based on the fact that the all the target places in the stamp rally are stored in history information database 3054 in accordance with the predetermined sequence.

When setting the stamp rally, required data is written into databases 3052 - 3055. Accordingly, it is not necessary to prepare various tools including stamps, spaces for stamping, paper sheets for stamping and others for the stamp rally, in contrast to a conventional system.

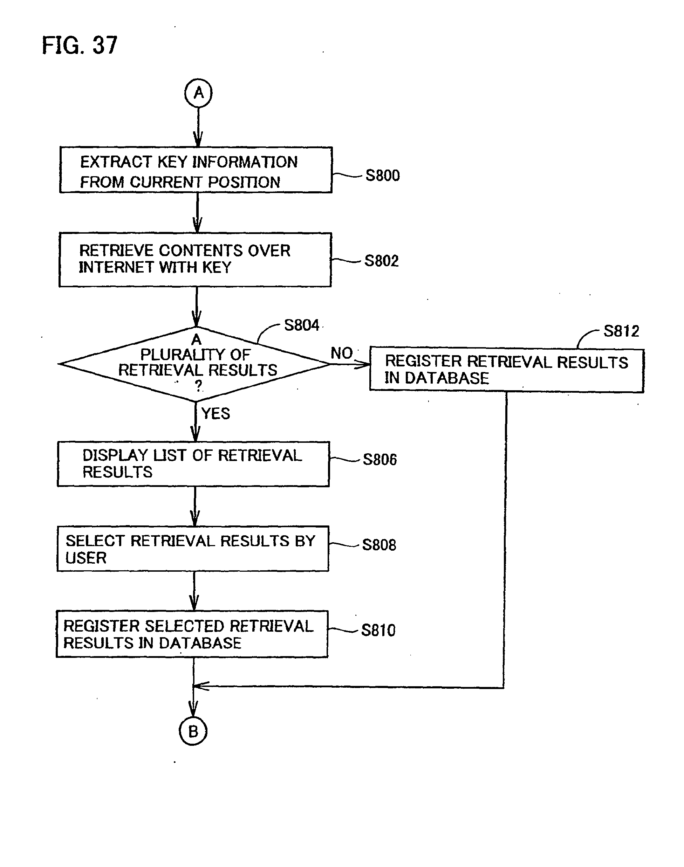

Further, the flowchart in Fig. 36 may be appropriately modified so that another service may be added to the stamp rally. For example, a flowchart of Fig. 37 is inserted between steps S716 and S718 in the flowchart of Fig. 36. Thereby, contents retrieved on Internet 3004 are registered in fields for the retrieval results in history information database 3054.

In the flowchart of Fig. 37, scenario information determination processing portion 305 If of stamp rally server apparatus 3005 extracts a keyword corresponding to the target place of the stamp rally, in which cellular phone 3001 is present as determined in the processing in step S706. Scenario information determination processing portion 3051f sends this keyword to Internet retrieving portion 3051b (S800). Internet retrieving portion 3051b sends this keyword to the search engine on Internet 3004, and retrieves the contents corresponding to this keyword over Internet 3004 (S802). When a plurality of items of contents are retrieved (YES in step S804), Internet retrieving portion 3051b prepares a list of names and others of the respective content items. The prepared list is sent to cellular phone 3001 via Internet connecting portion 3051a. Cellular phone 3001 receives this list, and displays it on display screen 3011 (S806). When the user of cellular phone 3001 selects one of the content names in the list, the selected content name is sent to stamp rally server apparatus 3005 (S808).

In response to this, Internet retrieving portion 3051b of stamp rally server apparatus 3005 retrieves URL (Uniform Resource Locators) of the selected contents on WWW (World Wide Web). History accumulation processing portion 3051d stores URL in history information database 3054 in connection with the user ID (S810). For example, the URL of the contents is stored corresponding to the user ID of "1000" and the stamp rally name of "Tour of Nara".

When only one content item is retrieved (NO in step S804), history accumulation processing portion 3051d stores the URL in history information database 3054 while keeping a corresponding relationship with the user ID, without preparing the list (S812).

For example, if the target place of the stamp rally, where cellular phone 3001 is present, is "Todai-ji", "Todai-ji" is determined as the keyword. Contents relating to "Todai-ji" are retrieved over Internet 3004, and the addresses of the retrieved contents are stored in history information database 3054.

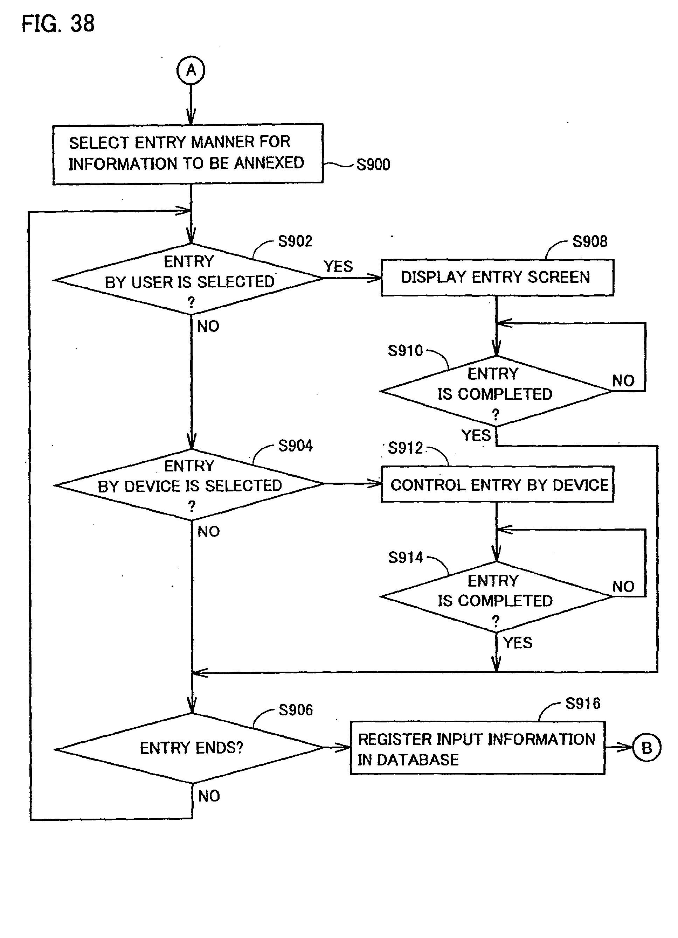

Further, the user information provided by the user can be registered in the spaces for annexed information in history information database 3054. This processing is performed by inserting the flowchart illustrated in Fig. 38 between steps S716 and S718 in the flowchart of Fig. 36.

On cellular phone 3001, the user selects a manner, in which entry keys are operated for entering the information to be annexed, or a manner using a device attached to cellular phone 3001 for the same purpose (S900). For example, if the operation of the entry keys is selected for the entry of annexed information (YES in step S902), a space or field for writing the annexed information is displayed on display screen 3011 of cellular phone 3001 (S908). In this state, the entry keys are operated to enter the annexed information so that the annexed information is displayed in the writing space or field. When the user completes the entry of annexed information (YES in step S906), the annexed information is sent from cellular phone 3001 to stamp rally server apparatus 3005. Stamp rally server apparatus 3005 receives the annexed information. History accumulation processing portion 3051d stores the annexed information in history information database 3054 while keeping a corresponding relationship with the user ID (S916).

When text data of "I had a good time today." is entered as the annexed information in cellular phone 3001, stamp rally server apparatus 3005 stores the text data in the space for annexed information in history information database 3054.

Cellular phone 3001 may be provided with a digital camera, and image data obtained by this digital camera may be entered as the annexed information (YES in S904). In this case, when the digital camera obtains the image data (S912), and entry of the image data is completed (YES in step S914 and YES in step S906), cellular phone 3001 sends the image data to stamp rally server apparatus 3005. Stamp rally server apparatus 3005 receives the image data. History accumulation processing portion 3051d stores this image data in the space for annexed information in history information database 3054 (S916).

When the digital camera in cellular phone 3001 captures an image of Todai-ji temple, image data representing the image of Todai-ji temple is entered as the annexed information. Stamp rally server apparatus 3005 stores this image data in the space for the annexed information in history information database 3054.

Stamp rally server apparatus 3005 may be provided with an image processing portion for processing the image data in various conversion methods. Such a manner may be employed that contents of the service class corresponding to the user ID are read from user information database 3053, and the image data is processed in a conversion manner of the type corresponding to the contents of this service class. For example, if "Normal" is registered in the service class, only the still images are handled. In this case, the image data is stored in history information database 3054 after converting it in accordance with JPEG (Joint Photographic Experts Group). If "High Level" is registered in the service class, both the movie images and still images are handled. In this case, the movie images are stored in history information database 3054 after converting the data thereof in accordance with MPEG4 (Moving Picture Experts Group 4).

The annexed information may be audio data. In this case, audio data representing voice and/or sound captured by a microphone in cellular phone 3001 is transferred to stamp rally server apparatus 3005. This audio data is stored in history information database 3054 as the annexed information. The audio data may be stored after converting it in accordance with the contents of the service class corresponding to the user ID.

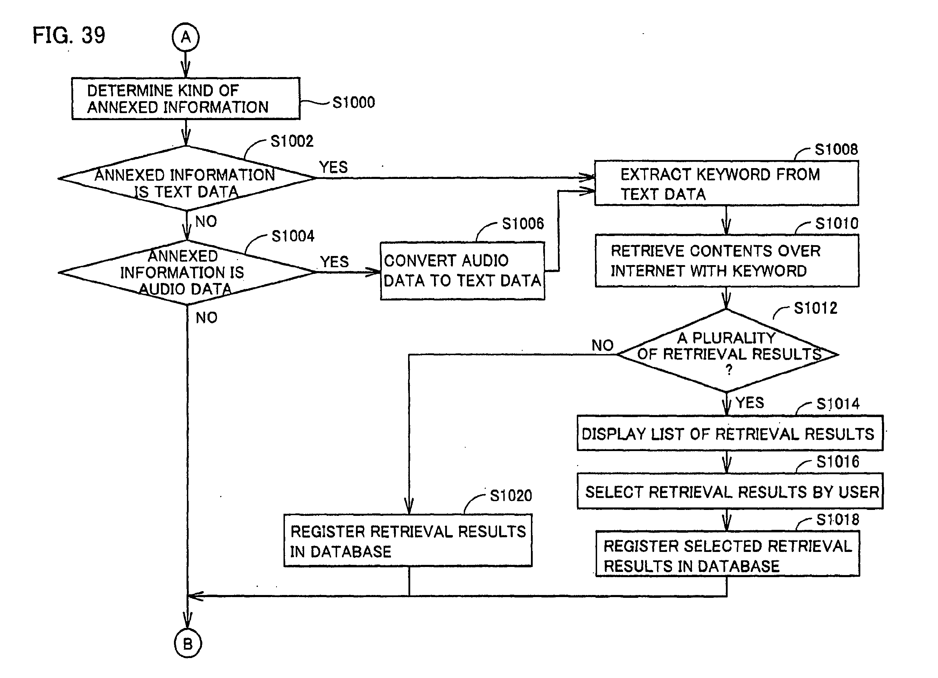

After storing the annexed information in history information database 3054, the keyword is extracted from the annexed information, and the contents may be retrieved based on this keyword. The retrieved contents may be registered in the space of the retrieval results in history information database 3054. This processing is achieved by providing processing illustrated in a flowchart of Fig. 39 immediately after the processing illustrated in the flowchart of Fig. 38.

Stamp rally server apparatus 3005 determines whether the annexed information is text data or audio data (S 1000). If the annexed information is text data (YES in step S1002), reference is made to this text data and the predetermined keyword group, and the keyword is detected from the text data (S1008). If the annexed information is the audio data (YES in step S1004), this audio data is converted by voice recognition to text data (S1006), and the keyword is detected in step S1008.

When the keyword is detected, stamp rally server apparatus 3005 sends the keyword to the search engine on Internet 3004 similarly to steps S802 - S812 in Fig. 37. Based on this keyword, retrieval for contents is performed over Internet 3004(S1010). When the plurality of content items are retrieved (YES in step S1012), a list of names and others of the content items is prepared, and is sent to cellular phone 3001. Cellular phone 3001 displays the list on display screen 3011 (S1014). When one of the content items in the list is selected, cellular phone 3001 notifies stamp rally server apparatus 3005 of the name of the selected contents (S1016). In response to this, stamp rally server apparatus 3005 stores the URL of the contents in the space of retrieval results in history information database 3054 (S1018). When only one content item is retrieved (NO in step S1012), the URL of the contents is stored in the space of retrieval results in history information database 3054 (S1020).

If the annexed information is text data of "I ate boiled barley and rice at Isuien", "Isuien" is extracted as the keyword, and the contents on the Internet are retrieved with this keyword. The results of this retrieval are stored in history information database 3054.

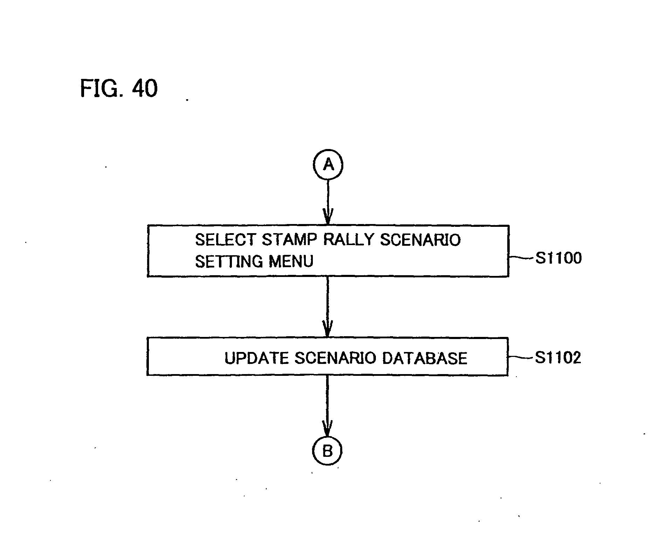

Procedures of control of the processing for registering the scenario of this stamp rally in stamp rally server apparatus 3005 will now be described in accordance with a flowchart of Fig. 40. The user may be either a sponsor of the stamp rally or an entrant of the stamp rally.

In user's terminal 3006, the name and target places of the stamp rally as well as entry requirements and rewards are set so that the scenario of the stamp rally is prepared. The scenario of this stamp rally is sent to stamp rally server apparatus 3005 via Internet 3004.

Stamp rally server apparatus 3005 receives the scenario of this stamp rally via Internet connecting portion 3051a (S1100). Scenario registering portion 3051g registers this scenario in scenario database 3052 (S1102).

The name of the scenario of stamp rally thus registered is included in the list and is provided to the user so that the user can select it, as already described with reference to the flowchart of Fig. 36. The entry requirements can be set in connection with age, name and others of the user in addition to the gender. According to the entry requirements, the entrants of the stamp rally can be restricted. The list provided to the users contains only the name of scenarios of the stamp rallies, of which entry requirements are satisfied.

Procedures of the control of processing for reading the history information in history information database 3054 will now be described.

Internet browsing processing portion 3051c converts the history information in history information database 3054 into browsable data in the HTML format of the WWW, and stores the converted data in HTML file database 3056. In this processing, data is stored while keeping a corresponding relationship with each user ID.

After the browsable history information is stored in HTML file database 3056, user's terminal 3006 can access stamp rally server apparatus 3005 over Internet 3004. When the user ID is indicated, the history information corresponding to this user ID is sent to user's terminal 3006. Thereby, it becomes possible to read or view the contents, which were registered during execution of the stamp rally.

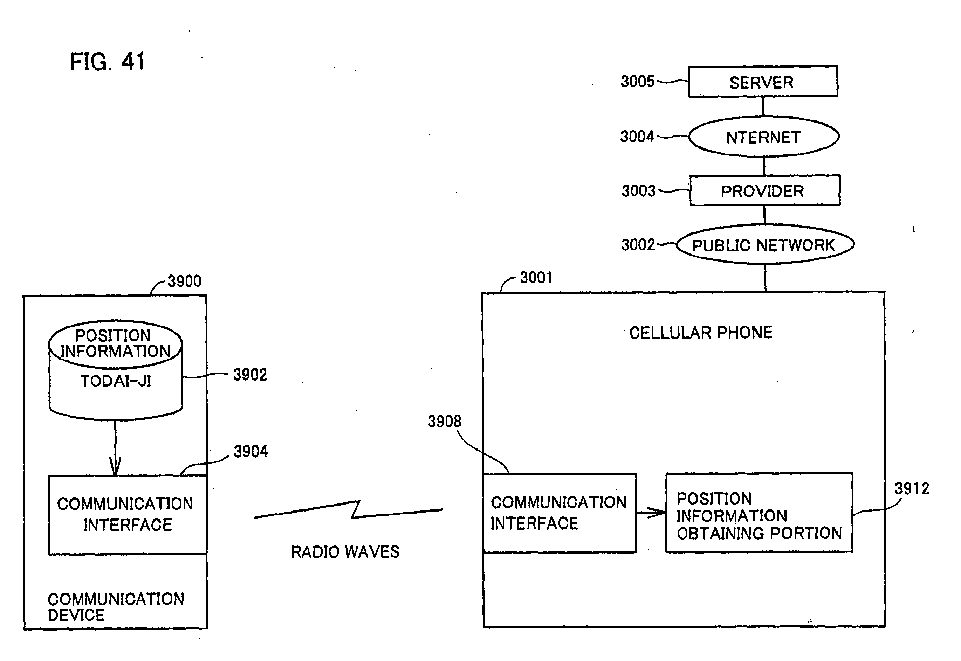

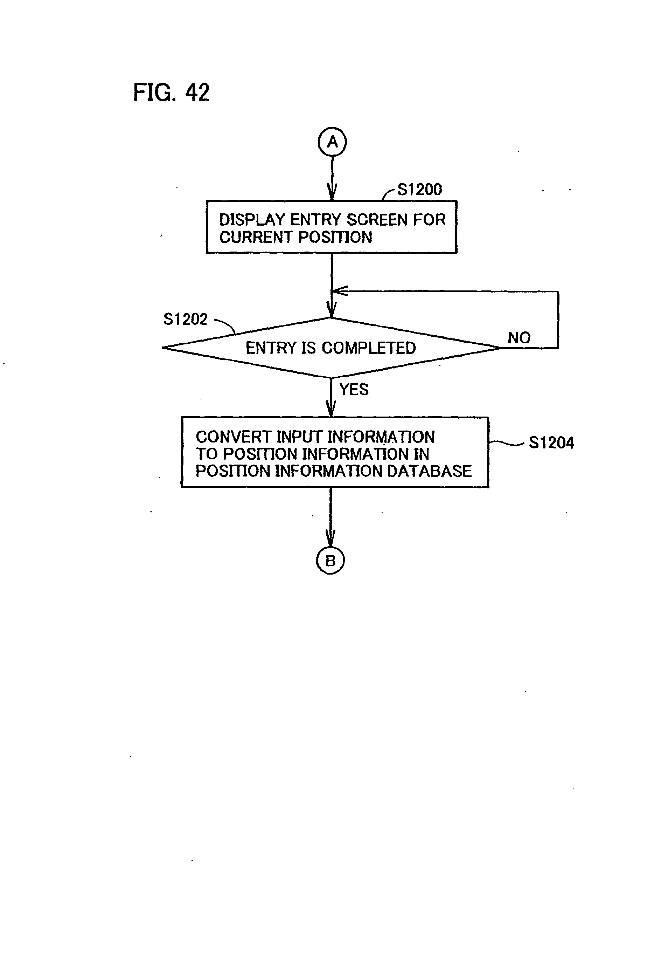

Referring to Figs. 41 and 42, another method for detecting the position of cellular phone 3001 without utilizing the GPS will now be described.

Referring to Fig. 41, a communication device 3900 is arranged in each target place of the stamp rally. The communication device 3900 includes a position information storing portion 3902 storing the position information indicating the target positions, and a communication interface 3904 for sending the position information to a specific service area.

As illustrated in the flowchart of Fig. 42, cellular phone 3001 located in the service area of communication device 3900 receives the position information from communication device 3900 via communication interface 3904. This position information is supplied to a position information obtaining portion 3912, and is displayed on a display screen (S1200, S1202). Position information obtaining portion 3912 sends this position information to stamp rally server apparatus 3005 together with the user ID. In stamp rally server apparatus 3005, position information obtaining portion 3051e obtains this position information, and this position information is sent to scenario information determination processing portion 3051f. Scenario information determination processing portion 3051f receives the user ID. Scenario information determination processing portion 3051f refers to position information database 3055, and converts this position information to target positions (S1204). Thereafter, processing is performed in the same manner as that already described.

This position information may be configured to express directly the target positions of the stamp rally without using the latitude and longitude. This may be formed of characters and/or an image expressing Todai-ji temple, and/or the latitude and longitude accompanied with a keyword.

The position information may be directly entered in cellular phone 3001 by the entry operation of the user. In this case, the user may be required to enter the keyword obtained in the target position of the stamp rally together with the position information so that the validity of the position information may be evaluated. For example, the user enters an intended keyword into cellular phone 3001 via entry keys, and the keyword is sent to stamp rally server apparatus 3005. Stamp rally server apparatus 3005 checks the keyword received from cellular phone 3001 against the keyword, which is preset corresponding to the position information. When the keyword sent from cellular phone 3001 matches the preset keyword, it is determined that the position information is valid.

The invention is not restricted to the foregoing embodiments, and may be modified in various manner. For example, the service area of the radio base station may be set as the target place of the stamp rally. In this case, it is not essential to detect the position of the user by user's cellular phone 3001, and stamp rally server apparatus 3005 can determine the position of cellular phone 3001.

According to the invention, as described above, when the position information of the mobile terminal matches with one of the position information items of the scenario, the position information of the mobile terminal is stored as the history information in a manner according to the scenario. By referring to the history information, it is possible to determine whether the mobile terminal visited the respective positions indicated by the respective position items of the scenario or not. Since the scenario contains the position information, the stamp rally, in which the user must visit the plurality of positions, can be achieved. Further, the stamp rally, in which the user must visit the plurality of positions in accordance with a predetermined sequence, can be achieved.

Although the present invention has been described and illustrated in detail, it is clearly understood that the same is by way of illustration and example only and is not to be taken by way of limitation, the spirit and scope of the present invention being limited only by the terms of the appended claims.

### Industrial Applicability

As described above, the server apparatus of the invention can operate, based on the position information sent from the terminal, to prepare the information to be provided to the terminal, to support the establishment of communication between the terminals and to store the history information of the position information of the terminals. Therefore, the server apparatus of the invention is suitable to the system for receiving and processing the position information sent from many terminals.

## Claims

1. A server apparatus for providing information to a terminal connected over a network, comprising:
communication means connected to said network for performing communication with said terminal;
theme storing means for storing one or a plurality of theme item(s) while keeping a first corresponding relationship with a given point or region in a predefined space;
information storing means for storing one or a plurality of information item(s) to be provided to said terminal while keeping a second corresponding relationship with said one or said plurality of theme items; and
information operating means connected to said communication means, said theme storing means and said information storing means for receiving, via said communication means from said terminal, select information for selecting the given point or region in said space as well as processing instruction information instructing processing to be performing on the information item having said second corresponding relationship with the theme item having said first corresponding relationship with said given point or region in said space, and performing the processing determined by said processing instruction information on the information item having said second corresponding relationship with the theme item having said first corresponding relationship with said given point or region in said space.

2. The server apparatus according to claim 1, wherein
said predefined space is a map space reflecting a real geographical range.

3. The server apparatus according to claim 1, wherein
said information operating means includes information retrieving means connected to said communication means, said theme storing means and said information storing means for receiving the select information for selecting the given point or region in said space and first processing instruction information from said terminal via said communication means, retrieving the information item having said second corresponding relationship with the theme item having said first corresponding relationship with said given point or region in said space from said information storing means, and sending the retrieved information item to said terminal previously sending said first processing instruction information via said communication means.

4. The server apparatus according to claim 1, wherein
said information operating means includes information retrieving means connected to said communication means, said theme storing means and said information storing means for receiving theme designating information designating a given theme item and first processing instruction information from said terminal via said communication means, retrieving the information item having said second corresponding relationship with the theme item designated by said theme designating information from said information storing means, and sending the retrieved information item to said terminal previously sending said first processing instruction information via said communication means.

5. The server apparatus according to claim 3, wherein
said information operating means includes theme adding means connected to said communication means and said theme storing means for receiving select information for selecting the given point or region in said space, a theme item name designated by said terminal and second processing instruction information from said terminal via said communication means, and adding the new theme item having said theme item name to said theme storing means for storage while keeping said first corresponding relationship with the given point or region selected by said select information in said space.

6. The server apparatus according to claim 5, wherein
said information operating means further includes theme retrieving means connected to said communication means, said theme storing means and said information storing means for receiving region information for selecting a given region in said space and third processing instruction information from said terminal via said communication means, retrieving the theme item included in said region selected by said region information, and sending said retrieved theme item via said communication means to said terminal previously sending said third processing instruction information.

7. The server apparatus according to claim 1, wherein
said server apparatus further includes:
delivery condition storing means for storing destination information for the one terminal or each of the plurality of terminals, and information delivery conditions determined for said one terminal or each of said plurality of terminals, and
information delivery means for performing retrieval on said delivery condition storing means in response to occurrence of change caused by said information operating means in stored contents of said theme storing means or said information storing means, thereby extracting the terminal having said information delivery conditions satisfied by said change, and sending a notification about said change in accordance with said destination information corresponding to said extracted terminal.

8. The server apparatus according to claim 7, wherein
said information delivery conditions are that the delivery is performed if the given region is in the space, and the point related to the newly added theme or article is present in this region.

9. The server apparatus according to claim 7, wherein
said information delivery conditions are automatically set in accordance with the processing instruction information of the terminal.

10. The server apparatus according to claim 7, wherein
said delivery condition storing means further includes edit means for editing said information delivery conditions in accordance with an instruction by said terminal.

11. An information providing method for providing information to a terminal connected over a network, comprising the steps of:
preparing one or a plurality of theme items while keeping a first corresponding relationship with a given point or region in a predefined space;
preparing one or a plurality of information item(s) to be provided to said terminal while keeping a second corresponding relationship with said one or said plurality of theme items; and
receiving, from said terminal, select information for selecting the given point or region in said space as well as processing instruction information instructing processing to be performing on the information item having said second corresponding relationship with the theme item having said first corresponding relationship with said given point or region in said space, and performing the processing determined by said processing instruction information on the information item having said second corresponding relationship with the theme item having said first corresponding relationship with said given point or region in said space.

12. A computer-readable record medium storing a program achieving an information providing method for providing information to a terminal connected over a network, said information providing method including the steps of:
preparing one or a plurality of theme items while keeping a first corresponding relationship with a given point or region in a predefined space;
preparing one or a plurality of information item(s) to be provided to said terminal while keeping a second corresponding relationship with said one or said plurality of theme items; and
receiving, from said terminal, select information for selecting the given point or region in said space as well as processing instruction information instructing processing to be performing on the information item having said second corresponding relationship with the theme item having said first corresponding relationship with said given point or region in said space, and performing the processing determined by said processing instruction information on the information item having said second corresponding relationship with the theme item having said first corresponding relationship with said given point or region in said space.

13. A server apparatus for supporting establishment of communication between terminals connected over a network, comprising:
obtaining means for obtaining identifying information of the terminal and position information of said terminal via said network;
storing means for storing said obtained identifying information and said obtained position information while keeping a corresponding relationship between them;
calculating means for calculating the number of the terminal(s) located within a predetermined distance from one terminal other then said terminal(s) based on said stored position information;
deciding means for deciding a distance allowing communication from said one terminal based on said calculated number of the terminal(s);
extracting means for extracting said other terminal(s) located within said decided distance with reference to said stored identifying information and said stored position information; and
select means for selecting said extracted other terminal(s) as terminal(s) having a possibility of establishing communication with said one terminal.

14. The server apparatus according to claim 13, wherein
said deciding means includes:
determining means for determining whether said calculated number of the terminals satisfies predetermined conditions or not;
changing means for changing said predetermined distance; and
control means for performing control such that said changing of the predetermined distance by said changing means and said calculation of the number of said other terminals located within said predetermined distance changed by said changing means are repeated until said determining means determines the satisfaction of said predetermined conditions; and
the predetermined distance changed by said changing means is decided as said distance allowing the communication when said determining means determines the satisfaction.

15. The server apparatus according to claim 14, wherein
said predetermined conditions in said determining means are that said number is equal to or larger than a predetermined number, and
said changing means increases said predetermined distance.

16. The server apparatus according to claim 13, wherein
said obtained position information of said terminal relates to a cell containing said terminal; and
said calculating means includes:
means for extracting the cell located within said predetermined distance from the one terminal, and
means for obtaining the number of the terminals located within said extracted cell.

17. The server apparatus according to claim 13, wherein
the position information of said terminal to be obtained is obtained by a GPS receiver arranged in said terminal.

18. An information communication method in a server apparatus for supporting establishment of communication between a plurality of terminals connected over a network, comprising the steps of:
obtaining identifying information of the terminal and position information of said terminal over said network;
storing said obtained identifying information and said obtained position information while keeping a corresponding relationship between them;
calculating the number of the terminals) located within a predetermined distance from one terminal other then said terminal(s) based on said stored position information;
deciding a distance allowing communication from said one terminal based on said calculated number of the terminal(s);
extracting said other terminal(s) located within said decided distance with reference to said stored identifying information and said stored position information; and
selecting said extracted other terminal(s) as terminal(s) having a possibility of establishing communication with said one terminal.

19. A computer-readable record medium storing a program achieving an information communication method in a server apparatus for supporting establishment of communication between a plurality of terminals connected over a network, said information communication method including the steps of:
obtaining identifying information of the terminal and position information of said terminal over said network;
storing said obtained identifying information and said obtained position information while keeping a corresponding relationship between them;
calculating the number of the terminals) located within a predetermined distance from one terminal other then said terminal(s) based on said stored position information;
deciding a distance allowing communication from said one terminal based on said calculated number of the terminal(s);
extracting said other terminal(s) located within said decided distance with reference to said stored identifying information and said stored position information; and
selecting said extracted other terminal(s) as terminal(s) having a possibility of establishing communication with said one terminal.

20. A server apparatus connected to a network, and comprising:
receiving means for receiving current position information representing a position of a mobile terminal from said mobile terminal over said network;
first storing means for storing a plurality of items of position information; and
second storing means connected between said receiving means and said storing means for storing the received current position information while keeping a corresponding relationship with said plurality of items of the position information when said received current position information is contained in said plurality of items of the position information stored in said storing means.

21. The server apparatus according to claim 20, wherein
said server apparatus further includes processing means for performing predetermined processing when said second storing means stores said current position information corresponding to all of said plurality of position information items.

22. The server apparatus according to claim 21, wherein
said predetermined processing is performed for assigning a right of receiving a free gift to a user of said mobile terminal.

23. The server apparatus according to claim 20, wherein
said server apparatus further includes third storing means for storing moving route information representing a sequence of movement to a plurality of positions represented by said plurality of items of the position information, and
said processing means includes means for performing predetermined processing when said second storing means stores said current position information corresponding to all of said plurality of position information items in accordance with the sequence stored in said third storing means.

24. The server apparatus according to claim 23, wherein
said predetermined processing is performed for assigning a right of receiving a free gift to a user of said mobile terminal, and sending information relating to said right to said mobile terminal.

25. The server apparatus according to claim 20, further comprising:
sending means connected to said second storing means for sending said current position information stored in said second storing means and corresponding to said plurality of position information items to another computer.

26. The server apparatus according to claim 20, further comprising:
position information receiving means connected to said first storing means for receiving said plurality of position information items from another computer, and storing said plurality of received position information items in said first storing means.

27. The server apparatus according to claim 20, wherein
said current position information is obtained from a GPS receiver arranged in said mobile terminal.

28. An information processing method in a server apparatus connected to a network, comprising the steps of:
receiving current position information representing a position of a mobile terminal from said mobile terminal over said network;
preparing in advance a plurality of items of position information; and
storing said received current position information while keeping a corresponding relationship with said plurality of items of the position information when said received current position information is contained in said plurality of items of the position information.

29. A computer-readable record medium storing a program achieving an information processing method in a server apparatus connected to a network, said information processing method including the steps of:
receiving current position information representing a position of a mobile terminal from said mobile terminal over said network;
preparing in advance a plurality of items of position information; and
storing said received current position information while keeping a corresponding relationship with said plurality of items of the position information when said received current position information is contained in said plurality of items of the position information.
